(19) Europäisches Patentamt
European Patent Office
Office européen des brevets

(11) EP 3 755 978 B1

## (12) EUROPÄISCHE PATENTSCHRIFT

(45) Veröffentlichungstag und Bekanntmachung des Hinweises auf die Patenterteilung:
**16.03.2022   Patentblatt 2022/11**

(21) Anmeldenummer: **19707725.8**

(22) Anmeldetag: **18.02.2019**

(51) Internationale Patentklassifikation (IPC):
**G01H 9/00** (2006.01)

(52) Gemeinsame Patentklassifikation (CPC):
**G01H 9/00**

(86) Internationale Anmeldenummer:
**PCT/EP2019/053979**

(87) Internationale Veröffentlichungsnummer:
**WO 2019/162234 (29.08.2019 Gazette 2019/35)**

(54) **VORRICHTUNGEN UND VERFAHREN ZUR VIBRATIONSANALYSE**

DEVICES AND METHOD FOR VIBRATION ANALYSIS

DISPOSITIFS ET PROCÉDÉS D'ANALYSE DE VIBRATIONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.02.2018   DE 102018202559**

(43) Veröffentlichungstag der Anmeldung:
**30.12.2020   Patentblatt 2020/53**

(73) Patentinhaber: **FRAUNHOFER-GESELLSCHAFT zur Förderung der angewandten Forschung e.V.
80686 München (DE)**

(72) Erfinder: **HUSAR, Peter
98693 Ilmenau (DE)**

(74) Vertreter: **König, Andreas Rudolf et al
Schoppe, Zimmermann, Stöckeler
Zinkler, Schenk & Partner mbB
Patentanwälte
Radlkoferstraße 2
81373 München (DE)**

(56) Entgegenhaltungen:
WO-A2-2016/103271      GB-A- 1 221 535
US-A1- 2013 329 953      US-A1- 2017 169 575

**Beschreibung**

Die vorliegende Erfindung bezieht sich auf Vorrichtungen zur Vibrationsanalyse einer zu vermessenden Oberfläche, auf Verfahren zur Vibrationsanalyse und auf ein Computerprogramm. Die vorliegende Erfindung bezieht sich ferner auf eine Anordnung und ein Verfahren zur musterbasierten optischen Vibrationsanalyse rotierender Maschinen.

Aus dem Stand der Technik bekannt sind verschiedene Verfahren und Vorrichtungen zur Vibrationsanalyse, wie beispielsweise in GB 1221535, US 2013/329953 oder US 2017/169575 offenbart.

Die bisherige Diagnostik für die Zustandsüberwachung von Maschinen und die Detektion von Defekten basiert auf der Erfassung von Körperschall der rotierenden Teile selbst und/oder der Erfassung der Vibrationen des Maschinenkörpers, etwa eine Abdeckung, Befestigungen oder des Aufbaus, sowie eine entsprechende Auswertung.

Die Vibrationen werden meist mittels mechanolelektrischer Wandler, etwa Piezowandler, oder optischer Wandler, etwa Photodioden oder Kameras, direkt oder kontaktlos von der Oberfläche der Maschine aufgenommen, zum Teil werden auch Laser zur kontaktfreien Erfassung des Körperschalls verwendet, etwa bei einem Laser-Mikrophon, einem Laser-Doppler oder einem Laser-Interferometer. Vor allem für die kontaktlose Vibrationsanalyse, die in vielen Bereichen der Maschinenanwendung die einzige Alternative der Vibrationsmessung darstellt, da aggressive Gase, Flüssigkeiten, eine radioaktive Umgebung und/oder sonstige gefährliche Anwendungen eingestellt werden, kommen nahezu ausschließlich optische (visuell, infrarot und/oder ultraviolett), zum Teil strahlende (etwa Radar oder Mikrowellen) Quellen bzw. Verfahren in Frage. Da die zu messenden Wege im Bereich von Mikrometer liegen und/oder Geschwindigkeiten im Bereich von Millimeter pro Sekunde und/oder Beschleunigungen im Bereich von Meter/s$^2$ auftreten können, die im unteren Bereich der Messempfindlichkeit liegen, ist eine direkte Messung kaum möglich. So werden mittels optischer Verfahren sekundäre Messgrößen verwendet, etwa im Zuge der Laser-Interferometrie oder des Laser-Dopplers, um überhaupt so geringe Messwerte erfassen zu können. Die Notwendigkeit einer extrem empfindlichen Messtechnik ergibt sich aus einem realistischen Vergleich: eine Gasturbine kann Abmessungen bis hin in die Größenordnung von 10 m erreichen. Die Abdeckung bzw. ihr Körper werden in einem Bereich von wenigen Mikrometern vibrieren. Für die optische Messerfassung bedeutet das daher, dass die gewünschte Messgröße (Vibrationsauslenkung) um einen Faktor von 10$^7$ kleiner ist als das Grundgerät. Bei solchen Verhältnissen ist eine direkte Messtechnik in keinem Bereich möglich, Hilfsgrößen, etwa Doppler-Frequenzen oder eine Anzahl von Interferenzstreifen, sind daher notwendig.

Die bisherigen optischen Anordnungen und Verfahren sind ihrem Funktionsprinzip nach lange bekannt und hinreichend bewährt. Allerdings sind sie auch sehr aufwendig und daher kostenintensiv. Unter diesen Bedingungen ist ein massenhafter Einsatz nicht realistisch, selbst eine dauerhafte Kontrolle des Maschinenzustands ist kaum vertretbar, bestenfalls eine zyklische, aber diskontinuierliche Überwachung wird durchgeführt. Wünschenswert wäre demnach ein Konzept zur einfachen kontaktlosen Vibrationsanalyse von Bauteilen.

Die Aufgabe der vorliegenden Erfindung besteht deshalb darin, ein Konzept zu schaffen, dass eine einfache und robuste Vibrationsanalyse rotierender Bauteile ermöglicht.

Diese Aufgabe wird durch den Gegenstand der unabhängigen Patentansprüche gelöst.

Erfindungsgemäss umfasst eine Vorrichtung zur Vibrationsanalyse eine Erfassungseinrichtung, die ausgebildet ist, um ein Muster von einer zu vermessenden Oberfläche zu erfassen, um ein erfasstes Bild des Musters bereitzustellen. Die Vorrichtung umfasst ferner eine Auswerteeinrichtung, die ausgebildet ist, um das erfasste Bild auszuwerten, um durch ein Vergleichsergebnis des erfassten Bildes mit einem Referenzbild ein Auswerteergebnis zu erhalten, das eine Information bezüglich einer Vibration der zu vermessenden Oberfläche aufweist. Vorteilhaft daran ist, dass basierend auf dem Vergleich des erfassten Bildes mit dem Referenzbild lediglich die Veränderungen in dem Bild herangezogen werden, um die Information über die Vibration zu erhalten, was eine schnelle und robuste Auswertung ermöglicht. Gleichzeitig werden hierfür Bildsensoren verwendet, um das Bild zu erfassen.

Gemäß einem Ausführungsbeispiel ist die Auswerteeinrichtung ausgebildet um den Vergleich basierend auf einer Kreuzkorrelation zwischen dem erfassten Bild und dem Referenzbild auszuführen. Vorteilhaft daran ist, dass die Kreuzkorrelation einen mathematisch einfachen Vergleich zwischen dem Bild und dem Referenzbild ermöglicht, so dass eine geringe Rechenleistung ausreichend ist, um die Information bezüglich der Vibration zu erhalten.

Gemäß einem Ausführungsbeispiel ist die Erfassungseinrichtung ausgebildet, um in einer Vielzahl von Iterationen eine Vielzahl von Bildern des Musters zu erfassen und, um eine Vielzahl von Bildern bereitzustellen. Das Bild ist ein zweites Bild der Vielzahl von Bildern, das in einer zweiten Iteration erfasst wird, das Referenzbild ist ein erstes Bild der Vielzahl von Bildern, das in einer vorangehenden ersten Iteration erfasst wird. Die Auswerteeinrichtung ist ausgebildet, um das erste Bild mit dem zweiten Bild zu vergleichen, um eine erste Information über eine Verschiebung der zu vermessenden Oberfläche zwischen dem ersten Bild und dem zweiten Bild zu erhalten, und um das zweite Bild mit einem dritten Bild, das in einer der zweiten Iteration nachfolgenden dritten Iteration erfasst wird, zu vergleichen, um eine zweite Information über die Verschiebung der zu vermessenden Oberfläche zwischen dem zweiten Bild und dem dritten Bild zu erhalten. Die Information über die Vibration weist die erste Information über die Verschiebung und die zweite Information über die Verschiebung auf. Vorteilhaft daran ist, dass sequenziell, für jede Iteration erfasster Bilder, eine Verschiebeinformation der zu vermessenden Oberfläche innerhalb der Iteration erhalten werden kann, die in der Information bezüglich der Vibration aufaggregierbar ist. Das bedeutet, durch eine Aggregation mehrerer Verschiebeinformationen über die Zeit kann eine Information über die Vibration erhalten werden.

Gemäß einem Ausführungsbeispiel ist die Auswerteeinrichtung so ausgestaltet, dass sie einen Korrelator aufweist, der ausgebildet ist, um eine Kreuzkorrelation zwischen dem Bild und dem Referenzbild auszuführen und, um ein Korrelationsergebnis bereitzustellen. Die Auswerteeinrichtung weist ferner einen Spitzenwertdetektor auf, der ausgebildet ist, um einen Maximalwert der Kreuzkorrelation zu bestimmen. Die Auswerteeinrichtung weist einen Signalprozessor auf, der ausgebildet ist, um basierend auf dem Maximalwert einen Vibrationsabstand zu ermitteln, der zumindest teilweise die Information bezüglich der Vibration bildet. Der Maximalwert der Korrelation kann eine Information bezüglich einer Verschiebung der zu vermessenden Oberfläche in einem Zeitraum zwischen der Erfassung des Referenzbildes und der Erfassung des Bildes bereitstellen. Durch Auswerten des Versatzes des Maximalwertes an einer Achse, die mit der Zeitachse korreliert, kann somit der Vibrationsabstand bestimmbar sein, der über die weitere zeitliche Betrachtung, etwa durch doppelte Integration von Weg hin zur Dimension Zeit hin zur Dimension Beschleunigung in unterschiedliche Werte der Information überführbar ist.

Gemäß der Erfindung ist die Erfassungseinrichtung so ausgestaltet, dass sie einen Bildersensor aufweist, wobei die Auswerteeinrichtung ausgebildet ist, um das Auswerteergebnis basierend auf einer Auswertung einer Verschiebung des Musters auf dem Bildsensor bereitzustellen. Vorteilhaft daran ist, dass eine Verschiebung auf dem Bildsensor mit geringem Rechenaufwand feststellbar ist und so mit geringem Rechenaufwand die Information bezüglich der Vibration bereitstellbar ist, so dass sowohl hohe Messfrequenzen verwendet werden können und/oder leistungsarme Rechenkomponenten eingesetzt werden können.

Gemäß einem Ausführungsbeispiel ist das Muster in einer Ebene des Bildsensors durch Projektion entlang einer ersten Sensorrichtung und entlang einer zweiten Sensorrichtung des Bildsensors so ausgestaltet, dass das Muster eine Ausdehnung aufweist, die größer ist als der Bildsensor, das bedeutet, das Muster kann den Bildsensor großflächig oder gar vollständig bedecken. Vorteilhaft daran ist, dass mit hoher Sicherheit davon ausgegangen werden kann, dass das Muster auf den Bildsensor projiziert ist und auf entsprechende Detektionsschritte zur Erkennung eines Ortes des Musters verzichtet werden kann, so dass die Vorrichtung in einer hohen Wiederholrate arbeiten kann.

Gemäß der Erfindung ist das Muster ein zweidimensionales Muster, das eine Vielzahl von nebeneinander angeordneten Streifen oder konzentrischen Ringen umfasst. Die Vielzahl von Streifen oder Ringen weist zumindest eine erste und eine zweite Helligkeitsintensität auf. Vorteilhaft daran ist, dass das zweidimensionale Muster die zu vermessende Oberfläche zumindest in dem Messbereich großflächig bedecken kann und gleichzeitig eine einfache Auswertung einer Verschiebung des Musters feststellbar ist.

Gemäß der Erfindung umfasst die Vielzahl von Streifen oder Ringen eine Vielzahl von Helligkeitsintensitäten. Vorteilhaft daran ist, dass eine Messgenauigkeit hoch ist.

Gemäß der Erfindung ist die Vielzahl von Helligkeitsintensitäten in einer aperiodischen Reihenfolge in dem zweidimensionalen Muster angeordnet. Vorteilhaft daran ist, dass eine robuste Auswertung der Verschiebung des Bildes bezüglich des Referenzbildes möglich ist, da basierend auf der aperiodischen Reihenfolge, beispielsweise durch Verwendung einer sinc-Funktion, beliebige Verschiebungen zwischen den Bildern erfassbar sind und Periodizitäten in dem Bild, die die Auswertung beeinträchtigen könnten, vermieden sind.

Gemäß einem Ausführungsbeispiel ist die Vorrichtung ausgebildet, um die zu vermessende Oberfläche in einem gekrümmten Bereich derselben zu vermessen. Vorteilhaft daran ist, dass auch bezüglich rotierender Teile direkte Messergebnisse erhalten werden können und ein Genauigkeitsverlust durch Erfassen indirekter Komponenten vermieden wird. Dies ist in einer besonders vorteilhaften Kombination durch Verwendung des zweidimensionalen Musters möglich, das vermeidet, dass beispielsweise ein Punktmuster basierend auf der gekrümmten Oberfläche zu stark gestreut wird und so mangelhafte Messergebnisse erhalten würden.

Gemäß einem Ausführungsbeispiel umfasst die Vorrichtung eine optische Signalquelle, die ausgebildet ist, um das Muster in Richtung der zu vermessenden Oberfläche auszusenden. Obwohl gemäß alternativen Ausführungsbeispielen das Muster auch direkt auf der zu vermessenden Oberfläche aufgebracht sein kann, beispielsweise mittels eines Aufklebers oder mittels eines Druckverfahrens, ermöglicht es die optische Signalquelle, beliebige Oberflächen zu vermessen, ohne eine Vorbereitung der zu vermessenden Oberfläche oder eine Veränderung derselben durchzuführen.

Gemäß einem Ausführungsbeispiel ist eine Senderichtung, entlang derer die optische Signalquelle konfiguriert ist, das Muster auszusenden, und eine Empfangsrichtung aus der die Erfassungseinrichtung konfiguriert ist, das Muster zu empfangen, innerhalb eines Toleranzbereichs von $\pm 15°$ senkrecht zueinander angeordnet. Vorteilhaft daran ist, dass hohe Krümmungen in der zu vermessenden Oberfläche zu vernachlässigbaren Beeinflussungen in der Reflexion des Musters führen und deshalb auch zu vermessenden Oberflächen mit hohen Krümmungen vermessen werden können.

Gemäß einem Ausführungsbeispiel ist die Erfassungseinrichtung ausgebildet, um eine Vielzahl von Bildern des Musters mit einer Frequenz von zumindest 40 kHz zu erfassen, wobei Auswerteeinrichtung ausgebildet ist, um das Auswerteergebnis so bereitzustellen, dass es Informationen über Schwingungen aufweist, die eine Frequenz von zumindest 20 kHz aufweisen. Vorteilhaft daran ist, dass Vibrationen der zu vermessenden Oberfläche oder in der zu vermessenden Oberfläche, die im akustischen Bereich liegen, erfassbar sind.

Gemäß einem Ausführungsbeispiel ist die Auswerteeinrichtung ausgebildet, um die Information bezüglich der Vibration der zu vermessenden Oberfläche so bereitzustellen, dass die Information eine Angabe über ein Leistungsspektrum der Vibration der zu vermessenden Oberfläche und/oder ein Ordnungsspektrum der Vibration der zu vermessenden Oberfläche und/oder eine zeitliche Veränderung eines Spektrums und/oder eine örtliche Änderung des Spektrums und/oder eine Extrapolation eines Vibrationswertes und/oder ein Vergleichsergebnis der Vibration oder eines hiervon abgeleiteten Wertes mit einem Schwellwert aufweist. Vorteilhaft daran ist, dass durch eine dementsprechende Vorverarbeitung eine Vibrationsanalyse mit einem hohen Teilgrad ermöglicht wird.

Gemäß einem Ausführungsbeispiel umfasst eine Vorrichtung zur Vibrationsanalyse eine Erfassungseinrichtung, die ausgebildet ist, um ein zweidimensionales Muster, etwa ein vorangehend beschriebenes erfindungsgemäss ausgestaltetes zweidimensionales Muster, von einer zu vermessenden Oberfläche zu erfassen, um ein erfasstes Bild des zweidimensionalen Musters bereitzustellen. Die Vorrichtung umfasst eine Auswerteeinrichtung, die ausgebildet ist, um das Bild des zweidimensionalen Musters auszuwerten, um ein Auswerteergebnis zu erhalten, das eine Information bezüglich einer Vibration der zu vermessenden Oberfläche aufweist. Vorteilhaft daran ist, dass durch die Verwendung eines zweidimensionalen Musters eine äußerst robuste Auswertung erhalten werden kann, selbst wenn die zu vermessende Oberfläche gekrümmt ist, wie es beispielsweise bei Kugellagern der Fall ist.

Gemäß der Erfindung ist die Auswerteeinrichtung ausgebildet, um durch einen Vergleich des erfassten Bildes mit einem Referenzbild das Auswerteergebnis zu erhalten, das die Information bezüglich der Vibration der zu vermessenden Oberfläche aufweist. Vorteilhaft daran ist, dass das robuste Ergebnis mit einem geringen Rechenaufwand erhalten werden kann.

Gemäß der Erfindung umfasst ein Vibrationsanalyseverfahren ein Erfassen eines Musters von einer zu vermessenden Oberfläche. Das Verfahren umfasst ferner ein Bereitstellen eines erfassten Bildes von dem Muster. Das Verfahren umfasst ein Auswerten des erfassten Bildes, und ein Erhalten eines Auswerteergebnisses durch einen Vergleich des erfassten Bildes mit einem Referenzbild, so dass das Auswerteergebnis eine Information bezüglich einer Vibration der zu vermessenden Oberfläche aufweist.

Gemäß der Erfindung umfasst ein Vibrationsanalyseverfahren ein Erfassen eines zweidimensionalen Musters von einer zu vermessenden Oberfläche, ein Bereitstellen eines erfassten Bildes des zweidimensionalen Musters und ein Auswerten des Bildes des zweidimensionalen Musters, und Erhalten eines Auswerteergebnisses, das eine Information bezüglich einer Vibration der zu vermessenden Oberfläche aufweist.

Gemäss der Erfindung ist ein Computerprogramm zur Durchführung der beschriebenen Verfahren offenbart.

Weitere vorteilhafte Ausführungsbeispiele sind in weiteren abhängigen Patentansprüchen beschrieben.

Bevorzugte Ausführungsbeispiele der vorliegenden Erfindung werden nachfolgend Bezug nehmend auf die beiliegenden Zeichnungen erläutert. Es zeigen:

Fig. 1    ein schematisches Blockschaltbild einer Vorrichtung zur Vibrationsanalyse gemäß einem Ausführungsbeispiel;

Fig. 2a    einen schematischen Graphen zur Erläuterung der Funktionsweise einer Auswerteeinrichtung gemäß einem Ausführungsbeispiel;

Fig. 2b    eine schematische Darstellung eines Graphen, bei dem die eine Kurve basierend auf der Abtastung mit einer Erfassungseinrichtung gemäß einem Ausführungsbeispiel in diskrete Werte überführt ist;

Fig. 2c    eine schematische Darstellung eines Graphen, bei dem ein Vergleich zwischen jeweils aufeinanderfolgenden Bildern ausgeführt wurde gemäß einem Ausführungsbeispiel;

Fig. 3    ein schematisches Blockschaltbild einer Vorrichtung zur Vibrationsmessung gemäß einem weiteren Ausführungsbeispiel;

Fig. 4a    eine schematische Darstellung einer Gegenüberstellung zweier erfasster Muster auf einem Bildsensor gemäß einem Ausführungsbeispiel;

Fig. 4b    eine schematische Darstellung eines Auswerteergebnisses gemäß einem Ausführungsbeispiel;

Fig. 4c    eine schematische vereinfachte Darstellung eines zentralen Bereichs des Graphen aus Fig. 4b gemäß einem Ausführungsbeispiel;

Fig. 4d    eine schematische Darstellung eines funktionellen Zusammenhangs zwischen der Vibration einer zu vermessenden Oberfläche und einer Projektion eines Musters sowie einer Erfassung durch die Kamera gemäß einem Ausführungsbeispiel;

Fig. 5 ein schematisches Blockschaltbild einer Vorrichtung zur Vibrationsanalyse gemäß einem weiteren Ausführungsbeispiel, die einen Bildspeicher aufweist;

Fig. 6a eine schematische Ansicht eines Streifenmusters gemäß einem Ausführungsbeispiel;

Fig. 6b eine schematische perspektivische Ansicht eines Bildsensors auf den das Muster aus Fig. 6a;

Fig. 6c eine schematische Darstellung einer Intensitätsverteilung eines Streifenmusters gemäß einem weiteren Ausführungsbeispiel, bei dem einzelne Streifen unterschiedliche Intensitäten aufweisen können;

Fig. 6d eine schematische perspektivische Ansicht des Streifenmusters aus Fig. 6c;

Fig. 6e eine schematische Aufsicht auf das Streifenmuster aus Fig. 6c, bei dem die Vielzahl von Helligkeitsintensitäten entlang einer Bildrichtung deutlich werden;

Fig. 6f eine schematische Aufsicht auf ein Ringmuster gemäß einem Ausführungsbeispiel;

Fig. 6g eine schematische perspektivische Ansicht einer Intensitätsverteilung eines Ringmusters gemäß einem Ausführungsbeispiel, bei denen die Intensitäten der einzelnen Ringe gemäß der sinc-Funktion angeordnet sind; und

Fig. 6h eine schematische Aufsicht auf eine Projektion des Ringmusters aus Fig. 6g auf eine ebene Fläche.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in den unterschiedlichen Ausführungsbeispielen dargestellte Beschreibung dieser Elemente untereinander austauschbar ist bzw. aufeinander angewendet werden kann.

Manche der nachfolgend beschriebenen Ausführungsbeispiele beziehen sich auf eindimensionale oder zweidimensionale Muster. Als eindimensionales Muster wird im Zusammenhang mit den hierin beschriebenen Ausführungen ein Muster verstanden, das zumindest einen aber auch eine höhere Anzahl von Punkten aufweist, die beispielsweise entlang einer Linie und im Speziellen entlang einer Geraden angeordnet sind. Obwohl die Verwendung eines einzelnen Punktes auch als null-dimensionales Muster verstanden werden kann, wird es der Einfachheit halber den eindimensionalen Mustern zugerechnet. Als zweidimensionales Muster wird dahingegen ein Muster verstanden, das eine relevante Ausdehnung entlang zweier Richtungen auf einer zu vermessenden Oberfläche und/oder auf einem erfassten Bildsensor aufweist. Hierzu gehören beispielsweise Streifenmuster, die zumindest einen, bevorzugt jedoch eine Mehrzahl und besonders bevorzugt eine Vielzahl von nebeneinander angeordneten Streifen aufweisen. Jeder der Streifen erstreckt sich entlang einer ersten Musterrichtung oder Bildrichtung. Die Anzahl der Streifen kann entlang der zweiten, ggf. senkrecht angeordneten, Richtung nebeneinander angeordnet sein, so dass die Streifen insgesamt das zweidimensionale Muster bilden. Ohne Einschränkung dieser Lehre werden auch andere Muster, die sich entlang zweier Richtungen erstrecken, als zweidimensionale Muster verstanden. Etwa ein Muster umfassend zumindest ein Polygon zumindest eine Ellipse, insbesondere einen Kreis oder eine Anzahl von zumindest zwei, bevorzugt eine höhere Anzahl, von konzentrischen Ellipsen oder Kreisen mit unterschiedlichen Radien oder Durchmessern. Hierbei können benachbarte Ringe unterschiedliche Helligkeitsintensitäten aufweisen, so dass ausgehend von einem gemeinsamen Innenbereich oder Mittelpunkt entlang einer beliebigen Richtung unterschiedliche Helligkeitsintensitäten durchlaufen werden.

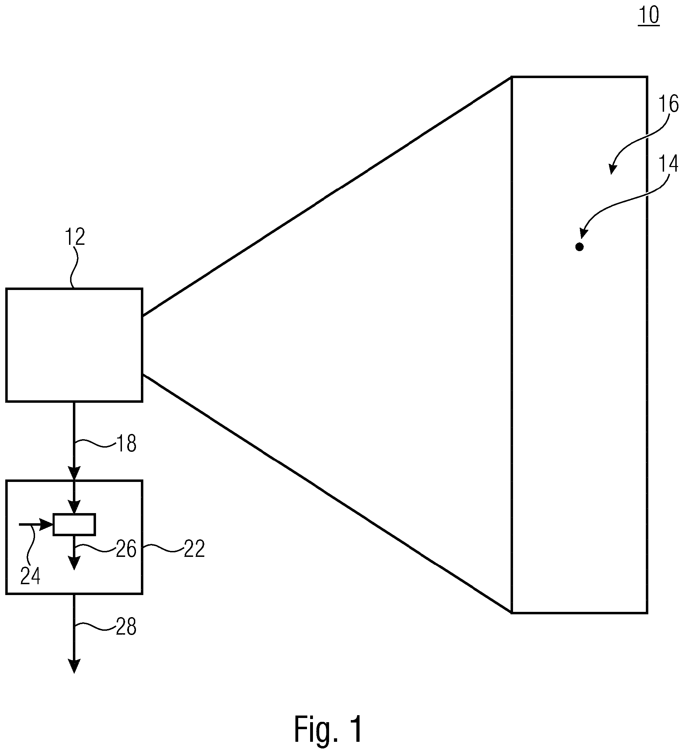

Fig. 1 zeigt ein schematisches Blockschaltbild einer Vorrichtung 10 zur Vibrationsanalyse gemäß einem Ausführungsbeispiel. Die Vorrichtung 10 umfasst eine Erfassungseinrichtung 12, die ausgebildet ist, um ein Muster 14 von einer zu vermessenden Oberfläche 16 zu erfassen, um ein erfasstes Bild 18 des Musters 14 bereitzustellen. Die Erfassungseinrichtung 12 kann hierfür beispielsweise einen Bildsensor aufweisen, der konfiguriert ist, um zumindest einen Teil der zu vermessenden Oberfläche 16 zu erfassen. Bei dem Bildsensor kann es sich um einen beliebigen Bildsensor handeln, mittels dessen eine Anwesenheit und/oder Verschiebung eines Bildes auf dem Sensor erfassbar ist, bspw. einen Sensor einer Zeilenkamera oder einen zweidimensionalen Sensor wie etwa einen komplementären Metalloxid-Halbleiter (complementary metal oxide semiconductor - CMOS) Bildsensor.

Bevorzugt wird ein Teil der zu vermessenden Oberfläche 16 von der Erfassungseinrichtung 12 erfasst, in der das Muster 14 während der gesamten Messung angeordnet ist, so dass auf eine Neujustierung der Erfassungseinrichtung 12 während der Messung verzichtet werden kann. Die zu vermessende Oberfläche kann eine beliebige Oberfläche sein, die bezüglich einer Schwingung, Verschiebung oder Vibration untersucht werden soll. Hierin beschriebene Ausführungsbeispiele sind besonders geeignet für rotierende Oberflächen, so dass beispielsweise eine Fläche eines Kugellagers die zu vermessende Oberfläche 16 sein kann. Ohne Einschränkungen in der Funktionalität können jedoch auch translatorisch oder fest montierte Oberflächen vermessen werden.

Das erfasste Bild 18 ist beispielsweise so ausgestaltet, dass das Muster 14 innerhalb des erfassten Bildes 18 eine bestimmte Position aufweist. Ist das Muster 14 beispielsweise ein einzelner Punkt, so kann es sich bei der Position des Musters 14 innerhalb des Bildes 18 um die räumliche Ausdehnung des Punktes auf dem Bildsensor handeln. Gemäß weiteren Ausführungsbeispielen ist es jedoch ebenfalls möglich, dass das von der zu vermessenden Oberfläche 16 erfasste Muster am Ort des Bildsensors größer ist als der Bildsensor selbst und dass der Bildsensor lediglich einen Teil des Musters erfasst. Der Ort des Musters auf dem Bildsensor bezieht sich bei diesen Ausführungsbeispielen auf eine Position eines Referenzabschnittes des Musters, beispielsweise eines speziellen Balkens oder Ringes auf dem Bildsensor und/oder innerhalb des Bildes 18.

Die Vorrichtung 10 umfasst ferner eine Auswerteeinrichtung 22, die ausgebildet ist, um das erfasste Bild 18 auszuwerten, um durch einen Vergleich des erfassten Bildes 18 mit einem Referenzbild 24 ein Auswerteergebnis 26 zu erhalten, das eine Information bezüglich einer Vibration der zu vermessenden Oberfläche 16 aufweist. Da das Auswerteergebnis 26 auf einem Vergleich des erfassten Bildes 18 und dem Referenzbild 24 basiert, kann es ausreichend sein, lediglich die Verschiebung des Musters 14 zwischen dem Referenzbild 24 und dem erfassten Bild 18 festzustellen. Deshalb kann zwar eine Analyse des genauen Ortes des Musters 14 in den Bildern 18 und 24 durchgeführt werden, es ist jedoch nicht erforderlich, da bereits durch einen direkten Vergleich, beispielsweise unter Verwendung einer Kreuzkorrelation, die Verschiebung des Musters 14 feststellbar ist. Dies ermöglicht eine einfache und trotzdem präzise Feststellung der Verschiebung des Musters 14 in dem Bild, das bei einer konstanten Relativposition der Erfassungseinrichtung 12 Hinweise auf eine Verschiebung der zu vermessenden Oberfläche 14 bezüglich der Erfassungseinrichtung 12 liefert und somit eine Information bezüglich einer Vibration der zu vermessenden Oberfläche 16 bereitstellt.

Das Referenzbild 24 kann ein zuvor bereitgestelltes und/oder abgespeichertes Bild sein, das beispielsweise während einer Kalibrierung der Vorrichtung 10 erhalten wird und/oder das auf andere Art und Weise in Kenntnis des Musters 14 vorgegeben wird. Bevorzugt ist es, dass das Referenzbild 24 ein vorangehendes Bild ist, das von der Erfassungseinrichtung 12 aufgenommen wurde, beispielsweise während einer Vielzahl von Iterationen. So kann die Erfassungseinrichtung 12 laufend Bilder erfassen, wobei ein jeweils vorangehendes Bild als Referenzbild 24 für ein aktuell erfasstes Bild 18 verwendet wird. Insbesondere, wenn die Auswerteeinrichtung ausgebildet ist, um den Vergleich basierend auf einer Kreuzkorrelation zwischen dem erfassten Bild 18 und dem Referenzbild 24 auszuführen, kann ein jeweiliger iterativer Vergleich ein Ergebnis über eine Verschiebung der zu vermessenden Oberfläche zwischen zwei Iterationen angeben. Das bedeutet, dass die Erfassungseinrichtung 12 ausgebildet sein kann, um in einer Vielzahl von Iterationen eine Vielzahl von Bildern des Musters 14 zu erfassen und, um eine Vielzahl von Bildern bereitzustellen. Das erfasste Bild 18 kann im Sinne des Vergleichs ein nachfolgendes zweites Bild der Vielzahl von Bildern sein, das in einer zweiten Iteration erfasst wird. Das Referenzbild 24 kann ein demgegenüber erstes Bild, d. h., zuvor aufgenommenes Bild sein, das in einer vorangehenden ersten Iteration erfasst wird. Hierbei kann es sich um die unmittelbar vorangehende Iteration handeln. Auch wenn es sich hierbei um die bevorzugte Ausführung handelt, kann auch eine weiter zurückliegende Iteration für die Vergleichszwecke verwendet werden. Die Auswerteeinrichtung 22 kann ausgebildet sein, um einen zeitlichen Abstand und/oder eine Anzahl dazwischenliegender Iterationen entsprechend in dem Auswerteergebnis 26 zu berücksichtigen.

Die Auswerteeinrichtung 22 kann ausgebildet sein, um das erste Bild mit dem zweiten Bild zu vergleichen, um eine erste Information über eine Verschiebung der zu vermessenden Oberfläche zwischen dem ersten Bild und dem zweiten Bild zu erhalten, und um das zweite Bild mit einem dritten Bild, das in einer der zweiten Iteration nachfolgenden dritten Iteration erfasst wird, zu vergleichen, um eine zweite Information über die Verschiebung der zu vermessenden Oberfläche 16 zwischen dem zweiten Bild und dem dritten Bild zu erhalten. Die Information 28 über die Vibration der zu vermessenden Oberfläche 16 kann die erste Information über die Verschiebung und die zweite Information über die Verschiebung aufweisen, das bedeutet, durch eine Aneinanderreihung von Auswerteergebnissen 26 kann ein Vibrationsverlauf einer Vibration der zu vermessenden Oberfläche 16 in der Information 28 über die Vibration darstellbar sein.

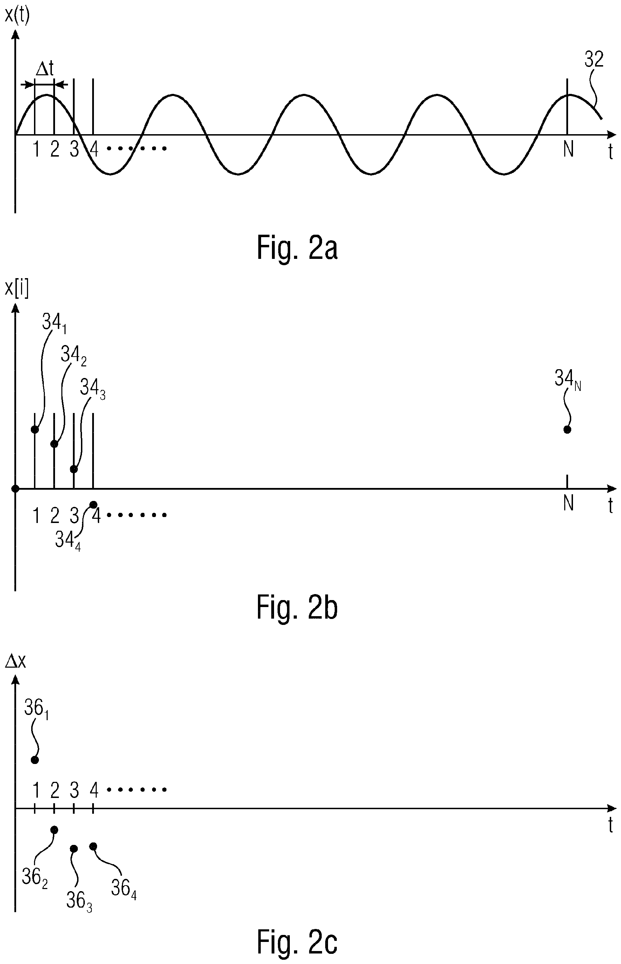

Fig. 2a zeigt einen schematischen Graphen zur Erläuterung der Funktionsweise der Auswerteeinrichtung 22 gemäß einem Ausführungsbeispiel. An einer Abszisse des Graphen ist die Zeit t angetragen, während an einer Ordinate ein Weg x in Abhängigkeit der Zeit t angetragen ist, der beispielsweise einen Abstand der zu vermessenden Oberfläche 16 bezüglich einer Referenzposition angibt. Das bedeutet, die diskreten Werte $34_i$ geben eine Position x[t] des Musters 14 auf dem Bildsensor der Erfassungseinrichtung 12 zum Zeitpunkt der Erfassung an.

Die Referenzposition kann beispielsweise ein Ort der zu vermessenden Oberfläche 16 in einem vibrationslosen Zustand sein. Eine Kurve 32 gibt beispielsweise eine Position des Musters 14 auf dem Bildsensor an. Diese kann über eine geometrische Beziehung/Lage zwischen einem Ort und/oder einer Orientierung der zu vermessenden Oberfläche 16 und einem Ort und/oder einer Orientierung der Erfassungseinrichtung 12 in die Lage der zu vermessenden Oberfläche überführbar sein. Das bedeutet, dass die Erfassungseinrichtung 12 ausgebildet sein, kann, um basierend auf der Position des Musters auf dem Bildsensor und/oder basierend auf einer Verschiebung desselben eine Position der zu vermessenden Oberfläche 16 zu bestimmen.

Die Kurve 32 zeigt somit beispielhaft eine Funktion einer Ortsänderung der zu vermessenden Oberfläche 16 über die Zeit t an, das bedeutet, die Kurve 32 beschreibt beispielhaft eine Vibration der zu vermessenden Oberfläche 16. Die Erfassungseinrichtung 12 ist beispielsweise ausgebildet, um zu bestimmten Zeiten i=1, ..., N Aufnahmen der zu vermessenden Oberfläche 16 bereitzustellen, das bedeutet, erfasste Bilder 18 bereitzustellen. Zwischen zwei aufeinanderfolgenden Aufnahmen kann eine Zeitspanne $\Delta t$ angeordnet sein, das bedeutet, eine Zeitdauer einer Iteration des Erfassungsvorgangs kann $\Delta t$ betragen. Beispielsweise kann die Erfassungseinrichtung 12 ausgebildet sein, um zumindest 1000 (1 kHz), zumindest 10000 (10 kHz), zumindest 20000 (20 kHz), zumindest 40000 (40 kHz) oder mehr, beispielsweise zumindest 50000 (kHz) Aufnahmen pro Sekunde anzufertigen, das bedeutet, die Zeit $\Delta t$ kann beispielsweise 1/1000, 1/10000, 1/20000, 1/40000 bzw. 1/50000 Sekunden betragen. Dies ermöglicht gemäß dem Nyquist-Kriterium die Analyse von Schwingungen bis hin zu Frequenzen von 500 Hz, 5 kHz, 10 kHz, 20 kHz oder 25 kHz. Das bedeutet, dass die Auswerteeinrichtung ausgebildet sein kann, um das Auswerteergebnis so bereitzustellen, dass es Informationen über Schwingungen aufweist, die von der zu vermessenden Oberfläche ausgeführt werden und die eine Frequenz von zumindest 20 kHz aufweisen.

Fig. 2b zeigt eine schematische Darstellung eines Graphen, bei dem die analoge Kurve 32 basierend auf der Abtastung mit der Erfassungseinrichtung 12 in diskrete Werte x[i] überführt ist.

Fig. 2c zeigt eine schematische Darstellung eines Graphen, bei dem ein Vergleich zwischen jeweils aufeinanderfolgenden Bildern ausgeführt wurde, beispielsweise indem eine Änderung des Ortes x[i] aus Fig. 2b ausgewertet wurde, um eine Ortsänderung $\Delta x$ zu erhalten. Dies kann beispielsweise unter Verwendung einer Kreuzkorrelation erhalten werden, die von der Auswerteeinrichtung 22 ausführbar ist. Alternativ können jedoch auch andere Verfahren zum Vergleichen von Bildern verwendet werden. Punkte $36_1$ bis $36_4$ können beispielsweise eine Veränderung des Ortes x gegenüber der vorangehenden Iteration angeben. Die Verschiebung $\Delta x$ kann ein Teil der Information 28 sein und somit anzeigen, um wieviel sich das Muster auf dem Bildsensor der Erfassungseinrichtung 12 zwischen zwei betrachteten Aufnahmen verändert hat. Über Kenntnis der Aufnahmerate bzw. der Zeit $\Delta t$ zwischen zwei Aufnahmen sowie der geometrischen Beziehung zwischen der zu vermessenden Oberfläche 16 und der Erfassungseinrichtung 12 kann auf den von der zu vermessenden Oberfläche 16 zurückgelegten Weg zurückgeschlossen werden. Hieraus ergibt sich ebenfalls, dass es zwar vorteilhaft, jedoch nicht erforderlich ist, zwei konsekutive Aufnahmen für den Vergleich heranzuziehen, da im Falle der Verwendung anderer Aufnahmen lediglich die verstrichene Zeit zwischen den beiden Aufnahmen veränderlich ist und entsprechend berücksichtigt werden kann, auch wenn hierdurch die erhaltene zeitliche Auflösung reduziert wird.

Die so erhaltenen Informationen können auch transformiert und/oder umgeformt werden. Beispielsweise kann eine Information über einen zurückgelegten Weg basierend auf einer zeitlichen Integration in eine Beschleunigungsinformation transformiert werden und/oder umgekehrt mittels einer Ableitung nach der Zeit. Weitere Transformationen, etwa in Beschleunigungssignale können von der Auswerteeinrichtung ebenfalls ausgeführt werden. Derartige Informationen können für die Vibrationsbetrachtung ebenfalls von Interesse sein.

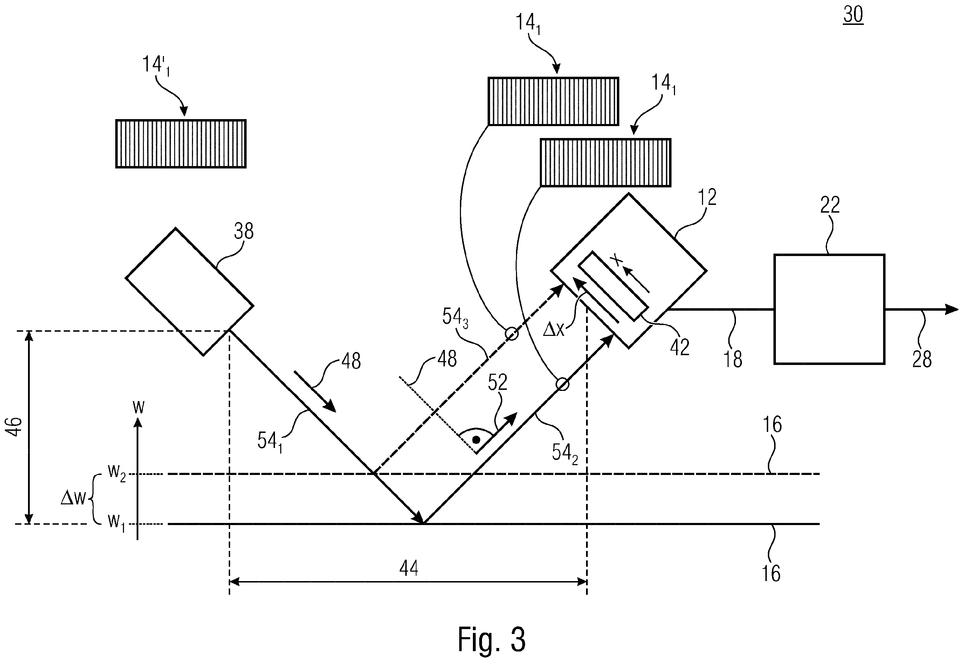

Fig. 3 zeigt ein schematisches Blockschaltbild einer Vorrichtung 30 zur Vibrationsmessung gemäß einem Ausführungsbeispiel. Die Vorrichtung 30 kann eine optische Signalquelle 38 aufweisen, die ausgebildet ist, um das Muster in Richtung der zu vermessenden Oberfläche 16 auszusenden. Die zu vermessende Oberfläche 16 kann entlang einer Richtung w veränderlich positioniert sein, beispielsweise basierend auf einer Schwingung oder Vibration. Die durchgestrichene Linie gibt den Ort der zu vermessenden Oberfläche 16 entlang der Richtung w zu einem ersten Zeitpunkt an, während die gestrichelte Linie den Ort der zu vermessenden Oberfläche 16 zu einem zweiten Zeitpunkt angibt, der beispielsweise dem ersten Zeitpunkt nachfolgend ist.

Obwohl auch das Muster 14 aus Fig. 1 verwendet werden kann, ist die Signalquelle 38 beispielsweise ausgebildet, um ein Balkenmuster $14'_1$ auszusenden, das an der zu vermessenden Oberfläche 16 reflektiert bzw. zurückgeworfen oder gestreut wird, so dass das reflektierte oder gestreute Muster $14_1$ von der Erfassungseinrichtung 12 erfasst werden kann, beispielsweise mittels eines Bildsensors 42 der Erfassungseinrichtung 12. Das Muster $14_1$ kann somit auf dem ausgesendeten Muster $14'_1$ basieren und durch Reflexion oder Streuung bzw. eine Oberflächeneigenschaft der zu vermessenden Oberfläche 16 gestreut, gestaucht oder verzerrt sein und somit dem reflektierten, gestreuten oder andersartig durch die zu vermessenden Oberfläche 16 veränderten Musters $14'_1$ entsprechen. Für die hierin beschriebenen Ausführungsbeispiele kann auch direkt das Muster $14_1$ ausgesendet werden, was so verstanden werden kann, dass lediglich irrelevante Verzerrungen an der zu vermessenden Oberfläche 16 erhalten werden.

Ein von der zu vermessenden Oberfläche 16 zwischen den zwei Zeitpunkten bzw. zwei Orten $w_1$ und $w_2$ zurückgelegter Weg $\Delta w$ kann auf dem Bildsensor 42 entlang einer ersten Bildrichtung, beispielsweise die x-Richtung, zu einer Verschiebung $\Delta x$ des Musters $14_1$ füh-

ren. Unter Kenntnis entsprechender Vorrichtungsabmessungen, beispielsweise einem Abstand 44 zwischen der optischen Signalquelle 38 und der Erfassungseinrichtung 12 und/oder einem Abstand 46 zwischen der optischen Signalquelle 38 und der zu vermessenden Oberfläche 16, etwas in einem vibrationslosen Zustand, und/oder anderen geometrischen Parametern wie etwa einer Winkelorientierung der optischen Signalquelle 38 und/oder der Erfassungseinrichtung 12 zueinander und/oder zu der zu vermessenden Oberfläche 16 oder eines Abstandes zwischen der Erfassungseinrichtung 12 und der zu vermessenden Oberfläche 16 kann die Wegverschiebung $\Delta x$ in die Wegverschiebung $\Delta w$ überführt werden, was einen Hinweis auf die Vibrations- oder Schwingungsamplitude der zu vermessenden Oberfläche 16 liefern kann. Gemäß einem Ausführungsbeispiel ist eine Ausrichtung zwischen der optischen Signalquelle 38 und der Erfassungseinrichtung 12 so gewählt, dass eine Senderichtung 48, entlang der das Muster 14 bzw. $14'_1$ ausgesendet wird, und eine Empfangsrichtung 52, aus der die Erfassungseinrichtung 12 konfiguriert ist, um das Muster $14_1$ zu empfangen, innerhalb eines Toleranzbereichs von $\pm 15°$, $\pm 10°$ oder $\pm 5°$ senkrecht zueinander angeordnet sind, das bedeutet, einen Winkel von $90°$ zueinander aufweisen.

Alternativ zur Verwendung einer optischen Signalquelle kann das Muster 14 oder $14_1$ auch anders an der zu vermessenden Oberfläche 16 angeordnet sein, beispielsweise durch Gravur, ein Druckverfahren oder durch Befestigung eines entsprechenden Aufklebers, wobei auch andere oder weitere Verfahren denkbar sind. Dies ermöglicht den Erhalt des Musters und die Auswertung desselben auch ohne eine Projektion, wobei die Projektion die Vermessung unterschiedlicher und veränderlicher hoher Flächen ermöglichen, ohne diese vorher entsprechend mit einem Muster zu versehen.

In anderen Worten ermöglichen es Ausführungsbeispiele der vorliegenden Erfindung, den Körperschall eines stationären oder rotierenden Teils und/oder einer vibrierenden Maschine mittels optischer Muster zu erfassen. Dazu wird von einer Lichtquelle 38 ein Bildmuster $14'_1$ auf die vibrierende Oberfläche 16 über den entsprechenden Strahl (Strahlenbündel) $54_1$ entlang der Senderichtung 48 auf die vibrierende Oberfläche 16 projiziert. Das reflektierte Muster $14_1$ gelangt entlang eines vom Ort der zu vermessenden Oberfläche 16 abhängigen Strahls $54_2$ oder $54_3$ und entlang der Empfangsrichtung 52 an die Kamera 12 und kann dort erfasst werden. Verschiebt sich die reflektierende Fläche 16 infolge von Vibrationen aus der Position $w_1$ in die Position $w_2$, so verschiebt sich auch das Muster $14_1$ in der Kamera 12, das in diesem Fall entlang des Strahls oder Strahlenbündels $54_3$ übertragen wird. Die Verschiebung der Muster $14_1$ zwischen den Zeitpunkten und im Kamerabild kann mit Mitteln der Signalverarbeitung detektiert werden.

Das Funktionsprinzip basiert auf der Auswertung der Verschiebung eines bekannten (definierten) Bildmusters. Daher ist kein monochromatisches Licht notwendig und keine aufwendige Optik. Der Abstand $\Delta x$ zwischen den Mustern auf der Kamera kann direkt gemessen werden und über bekannte Abmessungen des Messaufbaus auch direkt auf dem Vibrationsweg $\Delta w$ bzw. die Geschwindigkeit sowie auf die Beschleunigung zurückgerechnet werden. Das gesamte Verfahren setzt sich im Zeitbereich von wenigen Kilohertz um, so dass keine extrem schnelle Technologie wie sie bei Interferenzen oder Dopplern verwendet wird, notwendig ist. Das ursprüngliche Problem der extrem empfindlichen Messung der Laufzeitdifferenz (Interferenzverfahren) bzw. der extrem langsamen Bewegungsgeschwindigkeit im Vergleich zu Licht (Doppler-Verfahren) wird gemäß diesem Prinzip in den Bereich der Längenmessung (Pixel bzw. Subpixel) verschoben, indem eine Differenzlängenmessung im Submikrometerbereich kein Problem darstellt. Aus Sicht der Signalanalyse wird nach diesem Prinzip der zwar extrem starke - aber nutzlose - Gleichanteil des Messsignals (Lichtgeschwindigkeit durch eine echte Differenzbildung eliminiert.

Das Kamerasignal kann mit Methoden der Bild- und Signalverarbeitung auf das Vorhandensein von zwei (oder mehr) geometrisch bekannten Muster untersucht werden. Aus der ermittelten Wegdifferenz auf dem Kamerachip ergibt sich unter Berücksichtigung der Reflexionswinkel direkt der Schwingungsweg bzw. die Schwingungsgeschwindigkeit der zu vermessenden Oberfläche. Das Messprinzip bezieht sich darauf, dass eine Lichtquelle 38 ein vorgegebenes Muster projiziert. Der Emissionsstrahl $54_1$ ist auf die Oberfläche der zu untersuchenden Maschine gerichtet. $w_1$ und $w_2$ bezeichnen unterschiedliche Positionen der zu vermessenden Oberfläche 16. Die unterschiedlichen Positionen führen zu unterschiedlichen Orten der Reflexionsstrahlen $54_2$ und $54_3$ von der jeweiligen Position der Oberfläche 16. Die Kamera 12 empfängt das reflektierte vordefinierte Muster zur Oberflächenprojektion, so dass unterschiedliche Muster aus unterschiedlichen Lagen über die Strahlen $54_2$ und $54_3$ empfangen werden.

Im Vergleich zu bestehenden Methoden der optischen bzw. strahlungsbasierten Vibrationsanalyse, die dynamische Veränderungen (Vibrationen) aus einem ansonsten viele Größenordnungen ($10^{12}$... $10^{14}$) stärkeren statischen Signal (Lichtgeschwindigkeit) herauszulösen versuchen, bieten Ausführungsbeispiele eine Lösung, mit der die gesuchte dynamische Differenz (Musterverschiebung) ohne den unnützen statischen Anteil direkt gemessen werden kann. Ein methodischer Neuwert besteht darin, dass während bisher der dynamische Signalanteil bei einem extrem hohen statischen Anteil mit hohem technologischem Aufwand gesucht wurde, der statische Anteil gemäß Ausführungsbeispielen wegfällt bzw. gar nicht erst mit erfasst wird. Aus methodischer Sicht stellt dies eine Zentrierung des Messsignals bzw. des Messbildes dar. Aus der technologischen Sicht bringt diese Herangehensweise gemäß Ausführungsbeispielen erhebliche Vorteile im Vergleich zu bekannten Konzepten. Für die Implementierung der Ausführungsbeispiele erforderliche Komponenten sind in großer Anzahl frei verfügbar und relativ günstig, so dass ein solches System hinsichtlich der Kosten und des technologischen Aufwandes günstiger sein kann als beispielsweise Laser-Vibrometer.

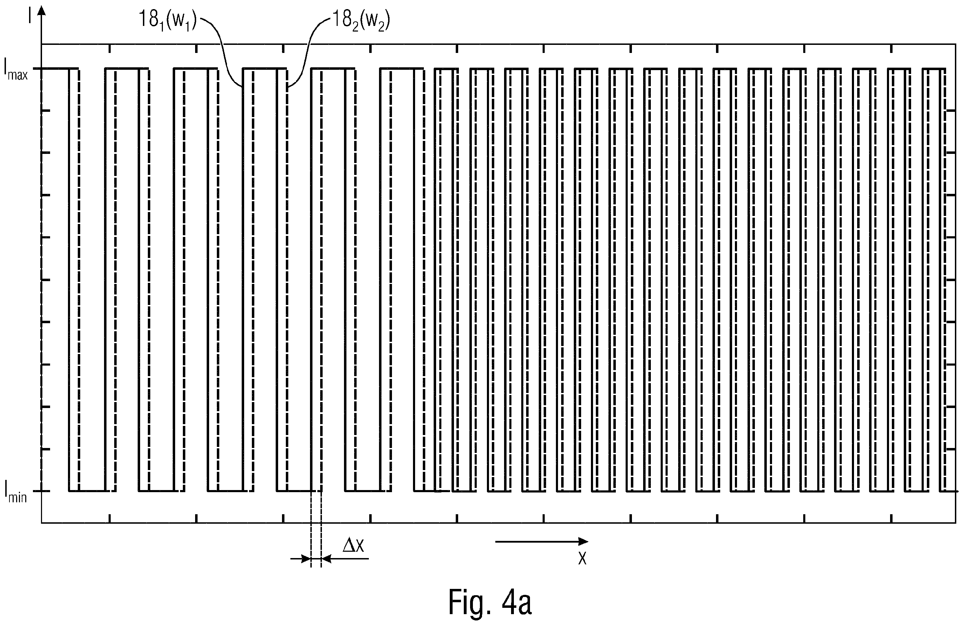

Fig. 4a zeigt eine schematische Darstellung einer Gegenüberstellung zweier erfasster Muster auf einem Bildsensor, beispielsweise dem Bildsensor 42 aus Fig. 3. Der Bildsensor kann beispielsweise eine Zeilenkamera sein. Die Abszisse kann beispielsweise die Bildrichtung x darstellen, während an der Ordinate eine Intensität des jeweiligen Bildteils oder Pixels dargestellt ist. Gemäß einem binären Balkenmuster, das zwischen Hell- und Dunkelbereichen wechselt, kann die Intensität I zwischen einem Minimalwert $I_{min}$ und einem Maximalwert $I_{max}$ wechseln und entsprechend dem Balkenmuster, das durch die reflektierende Oberfläche 16 verzerrt sein kann, auf dem Bildsensor wiedergegeben werden. Die durchgezogene Linie in Fig. 4a stellt beispielsweise ein erstes erfasstes Bild $18_1$ dar, bei dem die zu vermessenden Oberfläche 16 am Ort $w_1$ angeordnet ist, so dass die Linie als $18_1(w_1)$ bezeichnet ist. Die gestrichelte Linie $18_2(w_2)$ stellt beispielsweise das erfasste Bild dar, das erhalten wird, wenn die Muster $14_1$ k zu vermessende Oberfläche 16 am Ort $w_2$ angeordnet ist. Die beiden Bilder $18_1(w_1)$ und $18_2(w_2)$ sind um den Abstand $\Delta x$ auf dem Bildsensor verschoben.

In anderen Worten zeigt Fig. 4a das verzerrte Muster aufgenommen von einer Zeilenkamera mit einer Länge des Zeilensensors von beispielsweise 25 mm. Pegel 0 ($I_{min}$) entspricht beispielsweise schwarz, Pegel 1 ($I_{max}$) entspricht beispielsweise weiß. Wegen der Darstellung der Verschiebung (durchgezogene Linie für die erste Vibrationsposition $w_1$, gestrichelte Linie für die zweite Vibrationsposition $w_2$), sind nur die Konturen des Musters dargestellt.

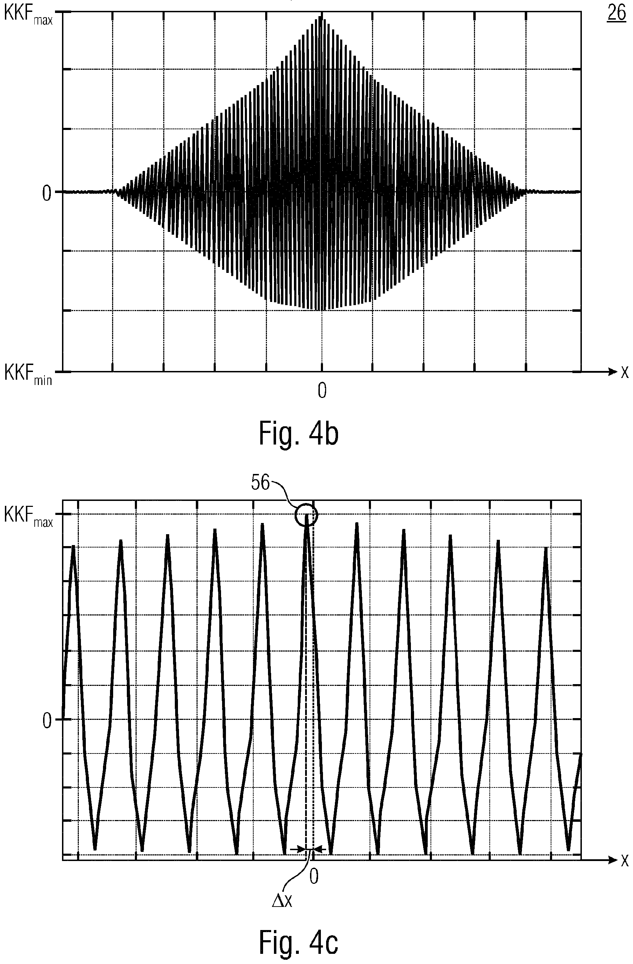

Fig. 4b zeigt eine schematische Darstellung eines Auswerteergebnisses 26, das beispielsweise durch Verwendung einer Kreuzkorrelation der beiden Bilder $18_1(w_1)$ und $18_2(w_2)$ aus Fig. 4a erhalten werden kann. Das bedeutet, Fig. 4b zeigt ein Ergebnis einer Kreuzkorrelationsfunktion zwischen zwei Kamerabildern bei einer Vibration der zu vermessenden Oberfläche 16.

Fig. 4c zeigt eine schematische vereinfachte Darstellung eines zentralen Bereichs des Graphen aus Fig. 4b. Ein globales Maximum 56 der Kreuzkorrelationsfunktion aus Fig. 4b ist um den Wert $\Delta x$ gegenüber dem Nullpunkt verschoben. Dieser Wert kann als die Verschiebung des Musters in den zwei Kurven gemäß Fig. 4a identifiziert werden.

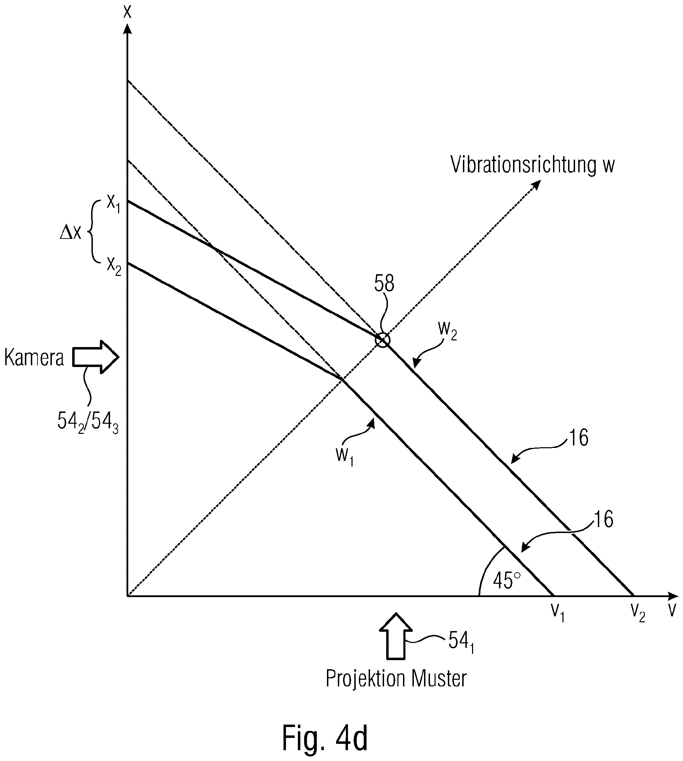

Fig. 4d zeigt eine schematische Darstellung eines funktionellen Zusammenhangs zwischen der Vibration der zu vermessenden Oberfläche und einer Projektion des Musters sowie einer Erfassung durch die Kamera. Auf die möglicherweise gekrümmte Fläche der zu vermessenden Oberfläche 16 wird ein Muster projiziert, beispielsweise ein einfaches Streifenmuster. Das von der Kamera empfangene und an der Ordinate dargestellte Muster ist durch die unterschiedlichen Postionen der zu vermessenden Oberfläche, das bedeutet, der unterschiedlichen Reflexionsflächen verzerrt, wie es anhand der Fig. 4a dargestellt ist. In Fig. 4d ist eine Situation abgebildet, in der die Musterprojektion und die Kameraebene senkrecht zueinander stehen, was mit einfachen Mitteln erhalten werden kann. Die Hauptrichtung der Vibrationsebene, das bedeutet, die Richtung w, kann auf der Halbierenden der Koordinaten liegen, das bedeutet, sowohl die optische Signalquelle 38 als auch die Erfassungseinrichtung 12 können jeweils ein einem 45° Winkel zur vibrierenden Oberfläche angeordnet sein. Hier wird auch ein deutlicher Unterschied zum Verfahren der Lasertriangulation erkennbar: sollte der Laser einer Lasertriangulation ausgerechnet einen Ort starker Krümmung, beispielsweise durch einen Eckpunkt 58 in der zu vermessenden Oberfläche 16 dargestellt, anpeilen, der auf der Achse der Vibrationsrichtung w liegt, so wären die Messergebnisse hierdurch zerstreut bzw. statistisch inakzeptabel unzuverlässig. Derartige Einbußen werden mit hierin beschriebenen Ausführungsbeispielen vermieden.

In anderen Worten und unter erneuter Bezugnahme auf die Fig. 4a bis 4c wurde das Ausführungsbeispiel gemäß den Fig. 4a bis 4d möglichst vereinfacht, um das Prinzip anschaulich zu präsentieren. Hierbei wurden folgenden Annahmen getroffen. Gemäß Fig. 4d liegen die Kameraebene und die Projektionsebene des Musters (Punktmuster, Streifenmuster, Flächenmuster) senkrecht zueinander. Ferner ist die Hauptbewegung der vibrierenden Oberfläche 16 auf der Winkelhalbierenden zwischen den Ebenen der Musterprojektion der Kameraebene angeordnet und durch die Achse w dargestellt, die der Vibrationsrichtung der Oberfläche entspricht. Ferner wird die Projektionsfunktion, d. h. die Oberflächenfunktion, als bekannt vorausgesetzt und kann daher analytisch untersucht werden. In diesem konkreten Fall sind es zwei lineare Abhängigkeiten, die sich genau auf der Winkelhalbierenden treffen. Mathematische Grundlagen hierzu werden nachfolgend erläutert:

Unabhängig vom Projektionsmuster werden zunächst die Koordinaten V in Abhängigkeit von der Vibrationsfläche in die Kameraebene x projiziert. In diesem konkreten Fall gilt folgende Projektionsgleichung:

$$x[0:V/2] = 1{,}5 \times V_{1,2} - 0{,}5V$$

$$x[V/2:V] = V_{1,2} - V$$

Mit den oberen Skalierungsoperationen wurden die Indizes in der Kameraebene berechnet. Im Weiteren wird nach dieser Operation das Projektionsmuster, beispielsweise ein Strichmuster, auf die Kameraebene projiziert:

Während die Fig. 4a zwei Kameramuster darstellt, die nach ihrer Projektion auf eine geknickte Oberfläche entstehen, ist zu beachten, dass im Allgemeinen solche reflektierten Muster auch nicht linear bzw. unregelmäßig sein können. Hierbei kann berücksichtigt werden, dass die Kreuzkorrelationsfunktion (KKF) zwischen zwei verschobenen Kameramustern unabhängig von der gekrümmten Oberfläche die Verschiebung der vibrierenden Oberfläche detektieren kann, weshalb sie gemäß bevorzugten Ausführungsbeispielen verwendet wird. Wird beispielsweise eine Zeilenkamera verwendet, so kann durch Berechnung des Skalarprodukts der verschobenen Projektionen in Abhängigkeit von der Verschiebung ein Ergebnis erhalten werden, das direkt die Verschiebung des Musters auf dem Bildsensor zwischen den beiden berücksichtigten Kamerabildern angibt. Da diese Projektionen im akustischen Abtasttakt (bis ca. 50 kHz) erfassbar sind, ist der zeitliche Verlauf von Schwingungen messbar, was bisher mit der Lasertrigonometrie schwierig bis nicht möglich ist.

Fig. 4b zeigt eine vollständige Kreuzkorrelationsfunktion (KKF) der verschobenen Kamerabilder aus Fig. 4a. Fig. 4c zeigt einen Zoom im zentralen Bereich der KKF. Das Maximum der KKF liegt bei einer Verschiebung von $\Delta x$, beispielsweise -43 $\mu$m. Bei Bedarf lässt sich diese Verschiebung auf die tatsächliche Vibrationslänge $w_2-w_1$ in Fig. 4d umrechnen. Hierfür können Projektionsgleichungen verwendet werden, die beispielsweise vorangehend beschrieben wurden. Das bedeutet, die Auswerteeinrichtung kann ausgebildet sein, um unter Verwendung von Projektionsgleichungen, die die zu untersuchende Oberfläche beschreiben, eine Wegverschiebung des Musters auf dem Bildsensor in eine Positionsänderung oder Vibration der zu vermessenden Oberfläche zu überführen.

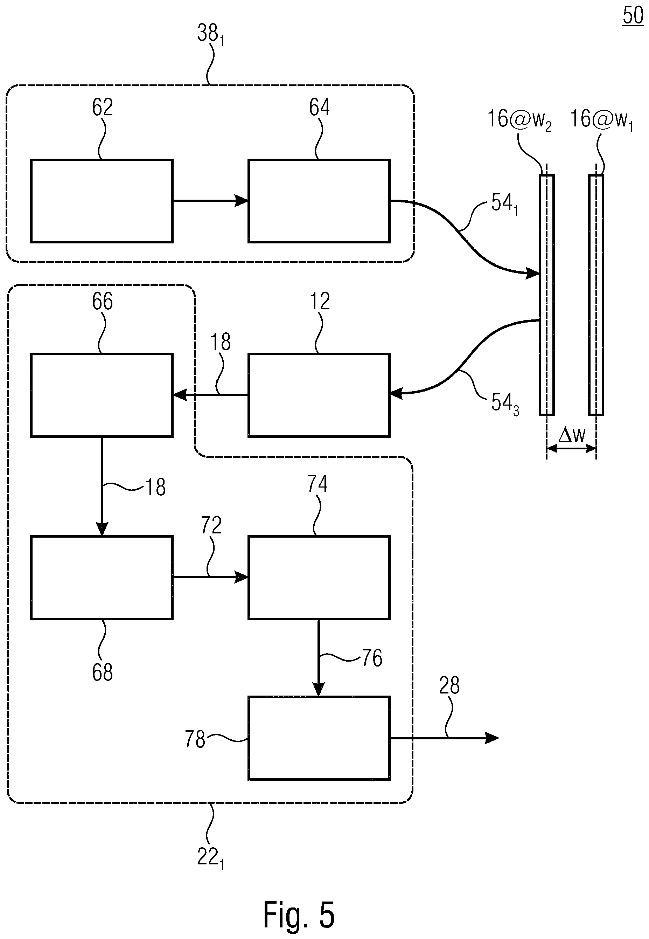

Fig. 5 zeigt ein schematisches Blockschaltbild einer Vorrichtung 50 zur Vibrationsanalyse gemäß einem Ausführungsbeispiel. Die Vorrichtung 50 umfasst eine optische Signalquelle $38_1$, beispielsweise die optische Signalquelle 38, die einen Mustergenerator 62 aufweist, der mit einem Musterprojektor 64 gekoppelt ist, wobei die optische Signalquelle $38_1$ konfiguriert ist, um ein Muster auf die zu vermessende Oberfläche 16 zu projizieren. Der Mustergenerator kann beispielsweise ein Bildgenerator sein, der dem Musterprojektor ein zu projizierendes Bild bereitstellt. Alternativ kann die optische Signalquelle auch so gebildet sein, dass ein Projektor ein möglicherweise flächiges Bild bereitstellt, etwa durch reine Beleuchtung und dass der Mustergenerator die flächige Beleuchtung von dem Projektor erhält und das Muster nachträglich in das Beleuchtungssignal einfügt, beispielsweise durch ein entsprechendes optisches Filter. Das bedeutet, dass die Reihenfolge aus Generator 62 und Projektor 64 auch vertauschbar sein kann. Alternativ kann auch eine optische Signalquelle verwendet werden, bei der der Generator 62 und der Projektor 64 in einem Funktionsblock zusammengefasst sind.

Die Vorrichtung 50 umfasst ferner die Erfassungseinrichtung 12, beispielsweise in Form einer Zeilenkamera oder Flächenkamera. Die Erfassungseinrichtung ist konfiguriert, um sequenziell und in mehreren Iterationen wiederholt Bilder 18 bereitzustellen. Die Vorrichtung 50 umfasst eine Auswerteeinrichtung $22_1$, beispielsweise die Auswerteeinrichtung 22. Die Auswerteeinrichtung $22_1$ umfasst einen Bildspeicher 66, der konfiguriert ist, um die Vielzahl von Bildern 18 zu speichern. Der Bildspeicher 66 kann alternativ auch Teil der Erfassungseinrichtung 12 sein, so dass die Auswerteeinrichtung $22_1$ auf den dann externen Bildspeicher 66 zugreifen kann, um die Bilder 18 zu erhalten.

Die Auswerteeinrichtung $22_1$ umfasst einen Korrelator 68, der ausgebildet ist, um Bilder 18 aus dem Bildspeicher 66 zu empfangen und miteinander zu vergleichen, wobei der Korrelator 68 bevorzugt zwei aufeinanderfolgende Bilder 18 mittels einer Kreuzkorrelationsfunktion miteinander vergleicht. Der Korrelator 68 ist ausgebildet, um ein Korrelationsergebnis 72 bereitzustellen, beispielsweise das in Fig. 4b dargestellte Auswerteergebnis 26. Es ist jedoch auch möglich, das Auswerteergebnis bzw. das Korrelationsergebnis 72 weiterzuverarbeiten. Hierfür weist die Auswerteeinrichtung $22_1$ einen Spitzenwertdetektor 74 auf, der konfiguriert ist, um einen lokalen oder bevorzugt globalen Maximalwert der Kreuzkorrelation, d. h. in dem Korrelationsergebnis 72 zu bestimmen, wie es im Zusammenhang mit der Fig. 4c beschrieben ist. Das bedeutet, der Spitzenwertdetektor 74 kann ausgebildet sein, um den Maximalwert 56 zu bestimmen. Ein Ergebnis 76 des Spitzenwertdetektors 74 kann somit Informationen über den Maximalwert 56 aufweisen.

Die Auswerteeinrichtung $22_1$ kann ferner einen Signalprozessor 78 aufweisen, der ausgebildet ist, um basierend auf dem Maximalwert einen Vibrationsabstand, das bedeutet, den Abstand $\Delta w$, zu ermitteln, der zumindest teilweise die Information 28 bezüglich der Vibration bildet. Insbesondere kann eine Information über die Vibration über eine Mehrzahl oder Vielzahl von erhaltenen Informationen über den Vibrationsabstand $\Delta w$ erhalten werden.

Nachfolgend werden bevorzugte Ausführungsbeispiele im Zusammenhang mit dem Muster 14 erläutert.

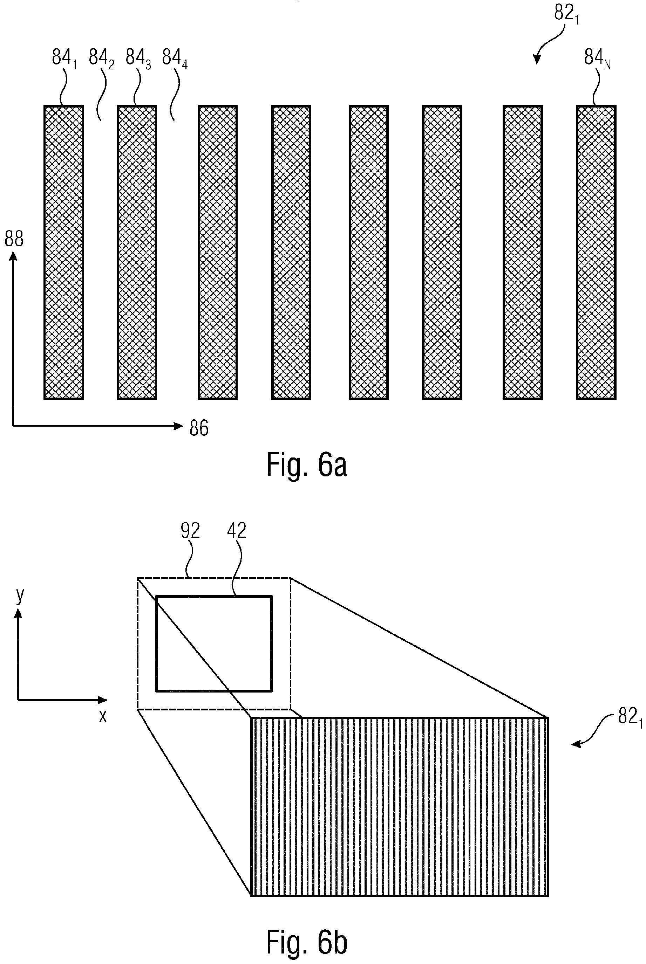

Fig. 6a zeigt eine schematische Ansicht eines Streifenmusters $82_1$, das als Muster 14 oder 14' einsetzbar ist und eine Vielzahl von Streifen $84_1$ bis $84_N$ aufweist. Das Muster $82_1$ kann als Ausgestaltung eines zweidimensionalen Musters verstanden werden. Das Streifenmuster $82_1$ kann beispielsweise als binäres Streifenmuster gebildet sein, bei dem abwechselnd Streifen mit minimaler Intensität (logisch 0), etwa die Streifen $84_1$ und/oder $84_3$ und Streifen maximaler Intensität (logisch 1), etwa die Balken $84_2$ und/oder $84_4$ angeordnet sind. Die Balken $84_1$ bis $84_N$ können unter gleichartigen Balken $84_1$, $84_3$ bzw. $84_2$ und $84_4$ eine gleiche oder eine verschiedene Abmessung entlang zweier senkrecht zueinander stehender Musterrichtungen 86 und 88 haben, wobei für eine einfache Implementierung auch eine gleiche Abmessung wählbar ist, da mit einer Verzerrung des Musters durch die reflektierende Oberfläche zu rechnen ist. Beispielsweise kann durch eine Verzerrung des Streifenmusters $82_1$ ein Bild gemäß der Fig. 4a auf dem Bildsensor erhalten werden.

In anderen Worten ist das Streifenmuster $82_1$ wegen der möglichst einfachen Darstellung ein äquidistanter Streifenzug. Dadurch kann es bei praktischen Messungen unter Umständen zu Periodizitäten nach Verschiebungen und daher zu unkontrollierten Mehrdeutigkeiten kommen, das bedeutet, das Streifenmuster $82_1$ wird bevorzugt so angepasst, dass entsprechende Periodizitäten vermieden werden, bspw. durch eine Anpassung der Streifenbreite an den Messbereich.

Fig. 6b zeigt eine schematische perspektivische Ansicht eines Bildsensors 42, auf den das Muster $82_1$ reflektiert wird. Gemäß einem Ausführungsbeispiel ist das Muster $82_1$ in einer Ebene 92, in der der Bildsensor 42 liegt und parallel hierzu ausgerichtet ist, so ausgestaltet, dass das Muster $82_1$ eine Größe entlang einer ersten Sensorrichtung, etwa entlang der Bildrichtung x und entlang einer zweiten, senkrecht hierzu angeordneten Sensorrichtung, etwa entlang einer zweiten Bildrichtung y, eine Ausdehnung aufweist, die größer ist als der Bildsensor 42 entlang der entsprechenden Richtung, bspw. zumindest um den Faktor 1,2, zumindest um den Faktor 1,4, zumindest um den Faktor 1,6 oder ein beliebiger anderer Wert, bspw. auch zumindest um den Faktor 2 also doppelt so groß. Das bedeutet, parallel zu der x-Richtung ist das Muster $82_1$ in die Ebene 92 projiziert bspw. um den Faktor zumindest 1,2, zumindest 1,4, zumindest 1,6 oder zumindest 2 größer und/oder entlang der y-Richtung. Der zunehmende Faktor ermöglicht eine zunehmende Sicherheit, dass das Muster trotz Vibration der zu vermessenden Oberfläche noch auf den Bildsensor trifft. Dies ermöglicht, dass trotz Vibration der zu vermessenden Oberfläche stets ein vollständiges Muster auf dem Bildsensor 42 projiziert wird und auf eine Detektion von Orten, wo das Muster im Speziellen projiziert wird, verzichtet werden kann.

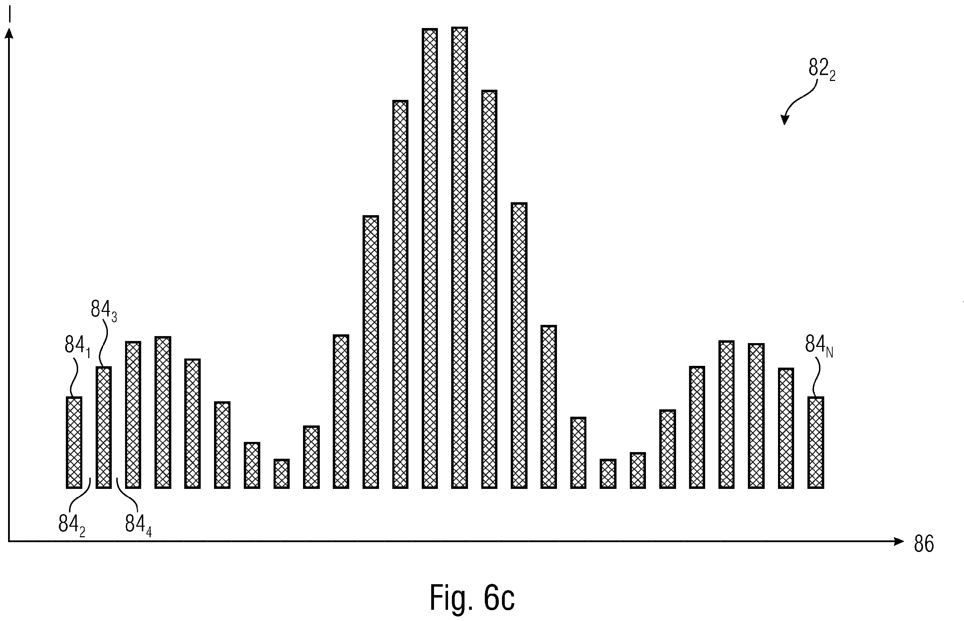

Fig. 6c zeigt eine schematische Darstellung einer Intensitätsverteilung eines Streifenmusters $82_2$, bei dem einzelne Streifen $84_1$ bis $84_N$ unterschiedliche Intensitäten I aufweisen können. Das bedeutet, dass verglichen mit dem Streifenmuster $81_1$ anstelle lediglich zweier Intensitätswerte zum Erhalten eines binären Musters eine Mehrzahl oder Vielzahl von Intensitätswerten verwendet werden kann, das bedeutet, die Balken, die einen von weiß verschiedenen Wert aufweisen, können einen Schwarzwert oder einen Grauwert aufweisen, wobei der Grauwert eine Vielzahl von einzelnen Stufen aufweisen kann. Dies ermöglicht eine Erhöhung einer Präzision der festgestellten Vibrationswege. Darüber hinaus bietet die Ausgestaltung des Musters $82_2$ dahin gehend, dass die Vielzahl von Streifen eine Vielzahl von Helligkeitsintensitäten aufweist, die Möglichkeit, eine robuste Positionserkennung zu ermöglichen. Durch Ausgestaltung der Streifen derart, dass zumindest die Dunkel-Streifen in direkter Nachbarschaft unterschiedlich ausgestaltet sind, das bedeutet, ein Dunkel-Streifen und ein direkt benachbarter Dunkel-Streifen, kann vermieden werden, dass durch starke Vibrationen Periodizitätseffekte auftreten. Wird beispielsweise das Muster $82_1$ betrachtet, so kann es zu Problemen kommen, wenn das Muster so weit verschoben wird, dass der Verschiebeweg zumindest die Ausdehnung eines ersten Hell-Streifens und eines ersten Dunkel-Streifens entlang der Richtung 86 zurücklegt, da die einzelnen Streifen nicht voneinander unterscheidbar sind. Gemäß der Ausgestaltung des Musters $82_2$ sind zumindest die direkt benachbarten Dunkelstreifen basierend auf ihren Grauwerten voneinander unterscheidbar, so dass ein erhöhter Periodizitätsabstand erhalten werden kann.

Erfindungsgemäss sind die Helligkeitsintensitäten der Balken 84, zumindest der Dunkel-Balken, entsprechend einer sinc-Funktion in dem zweidimensionalen Muster angeordnet. Die sinc-Funktion kann als $\sin(x)/x$ bzw. $\operatorname{sind}(\pi)/\pi x$ definiert werden.

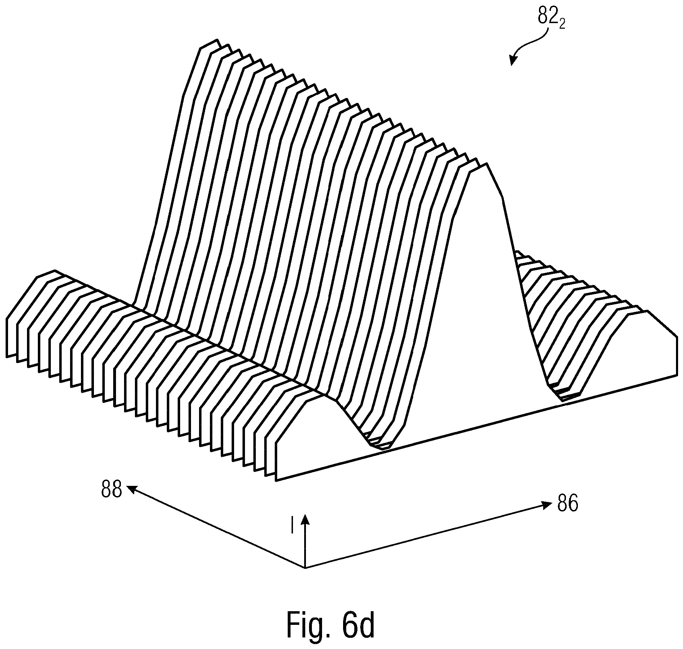

Fig. 6d zeigt eine schematische perspektivische Ansicht des Streifenmusters $82_2$ entlang der ersten Musterrichtung 86 und der zweiten Musterrichtung 88, wobei eine dritte Dimension durch die Intensität der jeweiligen Balken dargestellt ist. Obwohl Fig. 6d so dargestellt ist, dass eine Vielzahl von einzelnen Teilmustern entlang der zweiten Musterrichtung 88 angeordnet ist, kann entlang der Musterring 88 auch ein kontinuierlicher Verlauf der einzelnen Balken erhalten werden, wie sie beispielsweise in Fig. 6a dargestellt sind.

In anderen Worten kann das Streifenmuster auch so beschaffen sein, dass es zur Vermeidung der Periodizitäten bei allen denkbaren Verschiebungen auf dem Kamerachip eindeutig wieder auffindbar ist. Hierfür ist die Vielzahl von Helligkeitsintensitäten in einer aperiodischen Reihenfolge in dem zweidimensionalen Muster angeordnet. Hierfür kann signalanalytisch beispielsweise die sinc-Funktion geeignet sein, die in den Fig. 6c und 6d dargestellt ist. Aus signalanalytischer Sicht ist die sinc-Funktion besonders für die anschließende Signalverarbeitung von Vorteil, da ihre Fourier-Transformierte idealerweise einer Rechteckfunktion entspricht, die vor allem für schnelle und echtzeitfähige Analyse besonders geeignet ist. Das bedeutet, die Auswerteeinrichtung 22 oder $22_1$ kann basierend auf der Musterausgestaltung ausgebildet sein, um die Musterverschiebung in Echtzeit zu bestimmen. Ein Muster gemäß der Fig. 6c ist unabhängig von seiner Verschiebung auf dem Chip, beispielsweise der Zeilenkamera und entlang der Zeilenrichtung, eindeutig identifizierbar.

Die einzeilige Bilderfassung wie in Fig. 6a dargestellt, kann zum Problem werden, wenn die inspizierte Fläche nicht ganz eben ist oder sich im Laufe der Untersuchung verformt. In solchen Fällen ist ein flächenhaftes bzw. räumliches Streifenmuster von Vorteil.

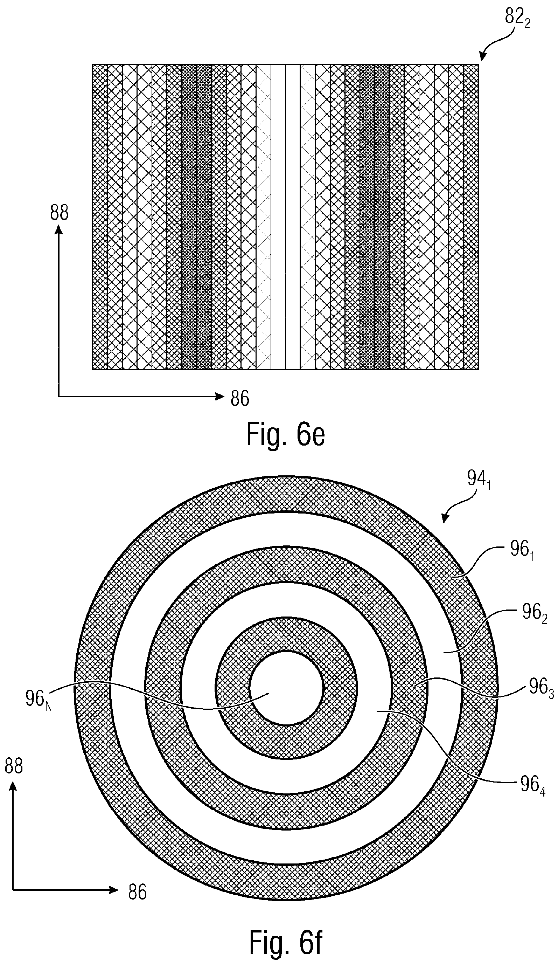

Fig. 6e zeigt eine schematische Aufsicht auf das Streifenmuster $82_2$, bei dem die Vielzahl von Helligkeitsintensitäten entlang der Bildrichtung 86 deutlich werden. Gleichzeitig wird deutlich, dass das Streifenmuster $82_2$

entlang der zweiten Bildrichtung 88 konstant ausgebildet sein kann.

In anderen Worten kann die in Fig. 6a dargestellte einzeilige Bilderfassung technische Herausforderungen aufwerfen, wenn die inspizierte Fläche nicht ganz eben ist oder sich im Laufe der Untersuchung verformt. In solchen Fällen kann ein flächenhaftes oder räumliches Streifenmuster verwendet werden, wie es beispielsweise in Fig. 6d dargestellt ist. Das in Fig. 6d dargestellte skizzierte Streifenmuster lässt sich zu einem Flächenmuster bzw. zu einem räumlichen Muster erweitern. Grundsätzlich gibt es nahezu unendliche viele Möglichkeiten zur flächenhaften Erweiterung. Für die Praxis können hierfür unterschiedliche Ausführungen verwendet werden.

So kann beispielsweise ein Fächer aus Streifenmustern verwendet werden, wie es in Fig. 6d dargestellt ist, das bedeutet, mehrere Streifenmuster können entlang der Bildrichtung 88 angeordnet sein. Dieses Projektionsmuster kann geeignet sein für Anwendungen, bei denen die Zeilenkamera auf die reflektierenden Strahlen nicht genau ausgerichtet werden kann bzw. deren Richtung instabil ist, beispielsweise wegen Verformung der Oberfläche. Bei diesem Fächerstrahl kann die Zeilenkamera von den reflektierten Strahlen auch bei mechanischen Unsicherheiten, etwa Schwingungen in anderen Dimensionen, lokale Wölbungen und dergleichen, zuverlässig getroffen werden. Eine solche Projektion ist mit verfügbaren technischen Mitteln realisierbar. Wegen der übersichtlichen Darstellung sind die Einhüllenden der Streifenmuster dargestellt, unterhalb derer sich die eigentlichen Lichtstreifen befinden, siehe Fig. 6d, sowie ihre Projektion auf eine ebene Fläche, siehe Fig. 6e.

Darüber hinaus bestehen auch die Möglichkeiten der Anpassung der Streifenmuster hin zu anderen Ausgestaltungen.

Fig. 6f zeigt eine schematische Aufsicht auf ein Ringmuster $94_1$, das eine Vielzahl von konzentrisch zueinander angeordneten Ringen $96_1$ bis $96_N$ aufweist. Das Ringmuster $94_1$ kann als Balkenmuster $82_1$ verstanden werden, das dahin gehend angepasst ist, das auch eine Verschiebung des Musters entlang der zweiten Musterrichtung 88 feststellbar macht. Insbesondere kann der Bildsensor der Erfassungseinrichtung als Flächensensor ausgebildet sein und/oder auf eine Orientierung des Musters bezüglich des Bildsensors verzichtet werden, selbst wenn dieser als Zeilenkamera ausgebildet ist.

Die Ringe 96 können kreisförmig sein, können jedoch auch eine andere Form aufweisen, beispielsweise elliptisch und/oder polygonzugartig.

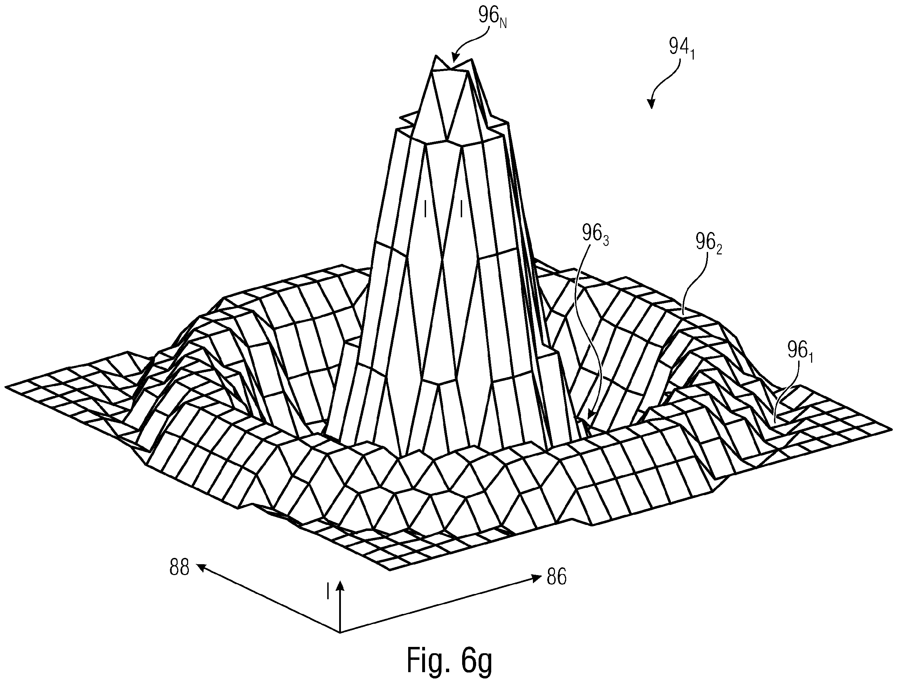

Fig. 6g zeigt eine schematische perspektivische Ansicht einer Intensitätsverteilung eines Ringmusters $94_2$ entlang der Musterrichtungen 86 und 88, bei denen die Intensitäten der einzelnen Ringe $96_1$ bis $96_N$ gemäß der sinc-Funktion angeordnet sind. Es können auch andere Ungleichheiten implementiert werden, wobei aperiodische Anordnungen der Intensitäten und insbesondere die Verwendung der sinc-Funktion bevorzugt werden.

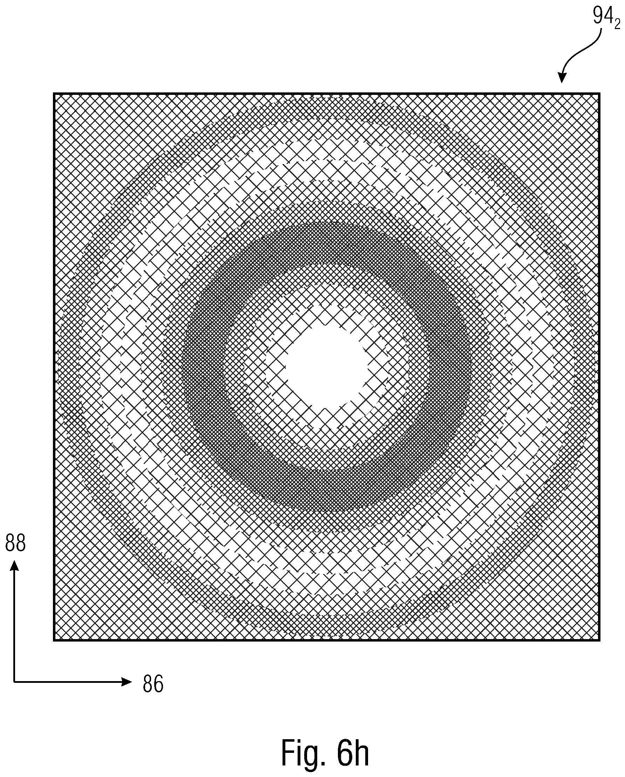

Fig. 6h zeigt eine schematische Aufsicht auf eine Projektion des Ringmusters $94_2$ auf eine ebene Fläche.

In anderen Worten können auch achssymmetrische und/oder rotationssymmetrische Streifenmuster gemäß den Fig. 6g und 6h eingesetzt werden. In vielen Fällen kann davon ausgegangen werden, dass die vibrierende zu untersuchende Fläche räumlich multimodal ist, das heißt der Reflexionswinkel wird nicht nur in die idealerweise gewünschte Ebene der Zeilenkamera strahlen, sondern auch in andere räumliche Richtungen und wird daher zeitlich nicht konstant sein. Für diesen Fall eignet sich gut eine rotationssymmetrische Projektion des Streifenmusters aus Fig. 6d, die in beide Dimensionen symmetrisch projiziert wird. Hierdurch kann erreicht werden, dass weder die Zeilenkamera noch die inspizierte Fläche strenge Vorgaben erfüllen müssen. Bei dieser Option handelt es sich um eine robuste Variante der hierin beschriebenen Ausführungsbeispiele. Auch hier bleibt der Implementierungsaufwand sehr niedrig, da im Vergleich zu den Ausgestaltungen gemäß den Fig. 6c bis 6e lediglich eine Erweiterung der Projektion zu implementieren ist, die unproblematisch realisierbar ist.

In anderen Worten zeigt Fig. 6g eine räumliche Variante des Streifenmusters aus Fig. 6c. Wegen der Übersichtlichkeit ist hier die räumliche Einhüllende der optischen Streifenmuster dargestellt. Die Streifen selbst befinden sich unter der Hülle mit dem Muster nach Fig. 6c.

Das Signal aus der Zeilenkamera kann mit einer daran angeschlossenen Elektronik, etwa einem Mikrocontroller (Micro Controller Unit - MCU), einem digitalen Signalprozessor DSP oder einem feldprogrammierbaren Gatter Array (Field Programmable Gate Array - FPGA) mit schnellen Methoden der Signal- und Bildverarbeitung ausgewertet werden. Das Ziel ist hierbei die aktuelle Wegdifferenz zwischen zwei Positionen der vibrierenden Fläche in Echtzeit, das heißt, im Takt der akustischen Abtastrate, zu berechnen. Im Fall des Streifenmusters kann die Kameraabbildung des Streifenmusters ausgewertet werden. Dafür eignen sich statistisch zuverlässige Methoden der Korrelationsfunktionen, die wegen der hohen geforderten Rechengeschwindigkeit im Frequenzbereich mittels FFT (Fast Fourier Transformation - schnelle Fouriertransformation) durchgeführt werden können. Bei Anwendung des Projektionsmusters nach Fig. 6f, Fig. 6g oder Fig. 6h wird die Anwendung von flächigen Methoden der Bildanalyse (räumliche Korrelation) bzw. ihrer funktionalen Äquivalente im Frequenzbereich ausführbar. Hierfür kann eine 2D-FFT verwendet werden.

Verglichen mit einem Punktmuster kann durch das Streifenmuster und/oder das Ringmuster das Signal-Rausch-Verhältnis (SNR) verbessert werden und zwar um die Anzahl der Streifen. Das Streifenmuster und/oder das Ringmuster kann verwendet werden, um die zu untersuchende Oberfläche, beispielsweise ein Kugellager, die gekrümmt und/oder geknickt sein kann, zu untersuchen. Bei einer hinreichend starken Krümmung würde sich bei der Lasertriangulation durch die Vibration eine zu niedrige Lichtintensität im Detektor ergeben, die das Messergebnis verfälschen würde. Durch die Verteilung eines Musters über eine mögliche Krümmung wird das Muster zwar verzerrt, die Vibration wird das Muster aber nur vernachlässigbar stark verändern, das heißt, in einem vernachlässigbaren Umfang. Das Verhalten lässt sich über die Kreuzkorrelationsfunktion erklären: durch eine Krümmung wird das Muster zwar verzerrt, aber während der Vibration bleibt die Verzerrung erhalten. Dadurch ist es dann lediglich notwendig, die Verschiebung des verzerrten Musters zu ermitteln, die durch die Vibration verursacht wird, was durch die Kreuzkorrelationsfunktion möglich ist.

Verglichen mit der Triangulation können hierin beschriebene Ausführungsbeispiele eine andere Zielstellung haben: bei der Triangulation bestimmt man den Abstand eines Punktes zu einem oder zwei Lichtdetektoren. Das lässt sich natürlich auch für bewegte Objekte realisieren, wie z. B. für bewegte Oberflächen. Demgegenüber verfolgen Ausführungsbeispiele das Ziel nicht die Abstände zu vermessen, sondern die Erfassung des zeitlichen Verlaufs der relativen Flächenposition, was um Größenordnungen schneller erfolgen kann als in der Triangulation. Dort wird versucht, das Signal aus einem konventionellen Vibrationssensors (Weg, Geschwindigkeit, Beschleunigung) auf dem optischen Weg zu erhalten. Dafür ist ein Lichtpunkt nicht ausreichend, da ein einzelner Lichtpunkt sich zufällig auf einer für die Vibrationsmessung ungünstigen Position befinden kann (Vibrationsknoten, mechanisch gedämpfte Stelle, mechanische Kante).

Die Darstellung des Streifenmusters im Zusammenhang mit den hierin beschriebenen Vorrichtungen 10, 20 und 50 entspricht dabei qualitativ einer möglichen Ausgestaltung hierin beschriebener Ausführungsbeispiele. Wenn die reflektierten Muster größer sind als der Erfassungsbereich der Kamera, wie es im Zusammenhang mit der Fig. 6b beschrieben ist, so kann man sich relativ sicher sein, dass die Kamera die Muster auch ohne die sonst aufwendige Kalibrierung bzw. Ausrichtung erfassen wird. Im Sinne der Auflösung ist es ebenfalls vorteilhaft, größere Musterelemente zu verwenden, denn je größer ein Musterelement auf dem Kamerachip erscheint, umso empfindlicher kann die Verschiebung ermittelt werden, so dass im Ergebnis der interessante Zeitverlauf der Verschiebung genau vermessen wird. Wird bspw. eine Zeilenkamera mit einer Länge von 20 mm (Erfassungsbereich oder Ausdehnung des Bildsensors) ausgegangen, so kann das Projektionsmuster bspw. mindestens doppelt so lang sein, also mindestens 40 mm. Dann kann mit relativer Sicherheit davon ausgegangen werden, dass das durch die Oberfläche verformte Muster die Zeilenkamera noch vollständig bedeckt. Es ist zwar prinzipiell ohne Beeinträchtigungen möglich, wenn die Zeilenkamera nicht vollständig mit dem reflektierten Muster bedeckt wird, allerdings kann dann eine Abnahme des Signal-Rausch-Verhältnisses (SNR) eintreten. Die geeignete Breite der Streifen kann von mehreren Parametern abhängen: einer Krümmung der untersuchten Oberfläche, der Musterstruktur (einfache Streifen, Sinc-Funktion, sonstige strukturierten Muster, etc. Es kann gelten, dass je eindeutiger die Musterstruktur ist (bspw. als Sinc-Funktion) umso feiner (eine geringere Breita aufweisend) können die Streifen sein und umso genauer kann die Ermittlung der Vibration erfolgen.

Unter erneuter Bezugnahme auf Fig. 5 zeigt diese in anderen Worten ein Blockschaltbild und eine Signalverarbeitung gemäß einem Ausführungsbeispiel. Im Mustergenerator 62 kann nach Möglichkeit ein flächiges Muster generiert werden, im einfachsten Fall ein Streifenmuster, wie es beispielsweise in Fig. 6a dargestellt ist. Dabei kann das Muster größere Abmessungen haben als der Kamerachip, etwa um den Faktor 1,2, 1,3, 1,4 oder mehr, wenn die Projektion des Musters in die Ebene des Kamerachips hinein betrachtet wird, um unter normalen Betriebsbedingungen immer den Erfassungsbereich der Kamera voll abzudecken. Um Mehrdeutigkeiten zu vermeiden, kann das Muster gemäß den Ausführungen im Zusammenhang mit den Fig. 6c, 6d, 6e, 6g oder 6h implementiert werden. Wegen der Richtungsabhängigkeit kann das Muster gemäß den Fig. 6g und 6h als optimal betrachtet werden. Das Muster wird optisch mittels Musterprojektor 64 auf die zu untersuchende vibrierende Fläche 16 projiziert. Dabei wird durch den zeitlich veränderlichen Abstand der Vibrationsfläche das reflektierte Muster von der Kamera 12 aufgenommen. Durch die vibrationsbedingte Verschiebung des - unter Umständen auch verzerrten Musters - empfängt die Kamera 12 auf dem Kamerachip verschobene Projektionen. Um die Verschiebung auswerten zu können, können mindestens zwei aufeinanderfolgende Bilder 18 im Bildspeicher 66 abgelegt werden. Die im Bildspeicher 66 abgelegten Bilder werden beispielsweise über den gesamten Pixelbereich der Kamera miteinander im Korrelator 68 kreuzkorreliert. Da die reale Wegverschiebung $\Delta w$ im Maximum der KKF zu finden ist, folgt dem Korrelator ein Spitzenwertdetektor 74, der anhand des KKF-Maximums die aktuelle Verschiebung detektiert. Die momentane detektierte Verschiebung kann im Analog-Digital-Signal-Prozessor (ADSP)/Auswertung 78 zu Ergebnissignalen und Parametern ausgewertet werden, die für die Vibrationstechnik wichtig sind. Die Auswerteeinrichtung kann ausgebildet sein, um die bereitgestellte Information bezüglich der Vibration der zu vermessenden Oberfläche so bereitzustellen, dass die Information 28 eine Angabe über ein Leistungsspektrum der Vibration der zu vermessenden Oberfläche und/oder ein Ordnungsspektrum der Vibration der zu vermessenden Oberfläche und/oder eine zeitliche Veränderung eines Spektrums und/oder eine örtliche Änderung des Spektrums und/oder eine Extrapolation eines Vibrationswertes und/oder ein Vergleichsergebnis der Vibration oder eines hiervon abgeleiteten Wertes mit einem Schwellwert aufweist, beispielsweise zum Abgleich, ob ein Spektrum oder ein Trend einen Schwellwert überschritten oder erreicht hat, wobei der Schwellwert beispielsweise eine definierte Vibrationsschwelle ist, die auf einen bevorstehenden Schaden oder auf einen bereits erfolgten Schaden an einem Gerät, das die zu vermessende Oberfläche aufweist, hinweisen kann.

Vorangehend beschriebene Ausführungsbeispiele beschreiben Vorrichtungen, bei denen die Auswertevorrichtung ausgebildet ist, um durch Vergleich eines erfassten Bildes mit einem Referenzbild das Auswerteergebnis zu erhalten. Alternativ oder zusätzlich kann die Vorrichtung 10 aus Fig. 1 auch so beschrieben werden, dass die Erfassungseinrichtung ausgebildet ist, um ein zweidimensionales Muster, beispielsweise eines der Muster aus den Fig. 6a bis 6h, von einer zu vermessenden Oberfläche zu erfassen, um ein erfasstes Bild des zweidimensionalen Musters bereitzustellen. Hierbei kann es sich um eine reflektierte oder gestreute Projektion des Musters an der zu untersuchenden Oberfläche handeln, alternativ oder zusätzlich kann das Muster auch fest an der Oberfläche angeordnet werden. Die Auswerteeinrichtung 22 kann ausgebildet sein, um das Bild des zweidimensionalen Musters auszuwerten, um ein Auswerteergebnis zu erhalten, das eine Information bezüglich einer Vibration der zu vermessenden Oberfläche aufweist. Hierbei kann unter Umständen auf den Vergleich mit einem Referenzbild verzichtet werden, es können beispielsweise auch aus dem Bild extrahierte Parameter evaluiert werden, beispielsweise eine Größe des Musters, von Bestandteilen hiervon und/oder Orientierungen des Musters oder Bestandteilen hiervon auf dem Bildsensor. Diese ausgewerteten Parameter können ebenfalls in einen Abstand überführbar sein, wenn die geometrischen Grundbedingungen vorbekannt sind. Gemäß einem Ausführungsbeispiel kann die Auswerteeinrichtung jedoch auch ausgebildet sein, um durch einen Vergleich des erfassten Bildes mit einem Referenzbild das Auswerteergebnis zu erhalten, das die Information bezüglich der Vibration der zu vermessenden Oberfläche 16 aufweist.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Erfindungsgemäss wird ein programmierbares Logikbauelement (beispielsweise ein feldprogrammierbares Gatterarray, ein FPGA) dazu verwendet, alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten, beschränkt durch den Schutzumfang der nachstehenden Patentansprüche, anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Vorrichtung (10; 30; 50) zur Vibrationsanalyse mit:

    einer Erfassungseinrichtung (12; $12_1$), die einen Bildsensor aufweist, die ausgebildet ist, um ein Muster (14; $14_1$; 82; 94) von einer zu vermessenden Oberfläche (16) zu erfassen, um ein erfasstes Bild (18) des Musters (14; $14_1$; 82; 94) bereitzustellen;
    einer Auswerteeinrichtung (22; $22_1$), die ausgebildet ist, um das erfasste Bild (18) auszuwerten, um durch einen Vergleich des erfassten Bildes (18) mit einem Referenzbild (24) eine Information über eine Verschiebung der zu vermessenden Oberfläche (16) zwischen dem erfassten Bild und dem Referenzbild zu erhalten, und um ein Auswerteergebnis (26) zu erhalten, das eine Information bezüglich einer Vibration der zu vermessenden Oberfläche (16) aufweist;
    wobei das Muster ein zweidimensionales Muster (82; 94) ist, das eine Vielzahl von nebeneinander angeordneten Streifen (84) oder konzentrischen Ringen (96) umfasst,
    wobei die Vielzahl von Streifen (84) oder Ringen (96) eine Vielzahl von Helligkeitsintensitäten aufweist;
    **dadurch gekennzeichnet, dass**
    die Vielzahl von Helligkeitsintensitäten in einer aperiodischen Reihenfolge in dem zweidimensionalen Muster (82; 94) angeordnet ist; oder
    wobei die Vielzahl von Helligkeitsintensitäten entsprechend einer sinc-Funktion in dem zweidimensionalen Muster (82; 94) angeordnet ist.

2. Vorrichtung gemäß Anspruch 1, bei der die Auswerteeinrichtung ($22_1$) ausgebildet ist, um den Vergleich basierend auf einer Kreuzkorrelation zwischen dem erfassten Bild (18) und dem Referenzbild (24) auszuführen.

3. Vorrichtung gemäß Anspruch 1 oder 2, bei der die Erfassungseinrichtung (12; $12_1$) ausgebildet ist, um in einer Vielzahl von Iterationen eine Vielzahl von Bildern (18) des Musters (14; $14_1$; 82; 94) zu erfassen und, um eine Vielzahl von Bildern (18) bereitzustellen;

    wobei das Bild (18) ein zweites Bild der Vielzahl von Bildern ist, das in einer zweiten Iteration erfasst wird, wobei das Referenzbild (24) ein erstes Bild der Vielzahl von Bildern ist, das in einer vorangehenden ersten Iteration erfasst wird;
    wobei die Auswerteeinrichtung ($22_1$) ausgebildet ist, um das erste Bild mit dem zweiten Bild zu vergleichen, um eine erste Information über eine Verschiebung ($\Delta w$) der zu vermessenden Oberfläche (16) zwischen dem ersten Bild (18) und dem zweiten Bild zu erhalten, und um das zweite Bild (18) mit einem dritten Bild, das in einer der zweiten Iteration nachfolgenden dritten Iteration erfasst wird, zu vergleichen, um eine zweite Information über die Verschiebung der zu vermessenden Oberfläche zwischen dem zweiten Bild und dem dritten Bild zu erhalten, wobei die Information (26) über die Vibration die erste Information über die Verschiebung und die zweite Information über die Verschiebung aufweist.

4. Vorrichtung gemäß einem der vorangehenden Ansprüche, bei der die Auswerteeinrichtung ($22_1$) einen Korrelator (68) aufweist, der ausgebildet ist, um eine Kreuzkorrelation unter Verwendung des Bildes (18) und des Referenzbildes (24) auszuführen und, um ein Korrelationsergebnis (72) bereitzustellen, wobei die Auswerteeinrichtung ($22_1$) ferner einen Spitzenwertdetektor (74) aufweist, der ausgebildet ist, um einen Maximalwert (56) der Kreuzkorrelation zu bestimmen, wobei die Auswerteeinrichtung ($22_1$) ferner einen Signalprozessor (78) aufweist, der ausgebildet ist, um basierend auf dem Maximalwert (56) einen Vibrationsabstand zu ermitteln, der zumindest teilweise die Information bezüglich der Vibration bildet.

5. Vorrichtung gemäß einem der vorangehenden Ansprüche, bei der die Erfassungseinrichtung (12) einen Bildersensor (42) aufweist, wobei die Auswerteeinrichtung (22; $22_1$) ausgebildet ist, um das Auswerteergebnis (26) basierend auf einer Auswertung einer Verschiebung (Δx) des Musters (14; 14₁) auf dem Bildsensor (42) bereitzustellen.

6. Vorrichtung gemäß Anspruch 5, bei der das Muster (14; 14₁) in einer Ebene (92) des Bildsensors (42) durch Projektion entlang einer ersten Sensorrichtung (x) und entlang einer zweiten Sensorrichtung (y) eine Ausdehnung aufweist, die größer ist als der Bildsensor (42).

7. Vorrichtung gemäß einem der vorangehenden Ansprüche, die ausgebildet ist, um die zu vermessende Oberfläche (16) in einem gekrümmten Bereich derselben zu vermessen.

8. Vorrichtung gemäß einem der vorangehenden Ansprüche, ferner mit:
einer optischen Signalquelle (38; 38₁), die ausgebildet ist, um das Muster (14'₁) in Richtung der zu vermessenden Oberfläche (16) auszusenden.

9. Vorrichtung gemäß Anspruch 8, bei der eine Senderichtung (48) entlang derer die optische Signalquelle (38; 38₁) konfiguriert ist, das Muster (14; 14₁; 82; 94) auszusenden und eine Empfangsrichtung (52) aus der die Erfassungseinrichtung (22; 22₁) konfiguriert ist, das Muster (14; 14₁; 82; 94) zu empfangen, innerhalb eines Toleranzbereichs von ±15° senkrecht zueinander angeordnet sind.

10. Vorrichtung gemäß einem der vorangehenden Ansprüche, bei der die Erfassungseinrichtung (12) ausgebildet ist, um eine Vielzahl von Bildern (18) des Musters (14; 14₁; 82; 94) mit einer Frequenz von zumindest 40 kHz zu erfassen, wobei Auswerteeinrichtung (22; 22₁) ausgebildet ist, um das Auswerteergebnis (26) aus der Vielzahl von Bildern (18) gemäß dem Nyquist-Kriterium so bereitzustellen, dass es Informationen über Schwingungen aufweist, die eine Frequenz von zumindest 20 kHz aufweisen.

11. Vorrichtung gemäß einem der vorangehenden Ansprüche, bei der die Auswerteeinrichtung (22; 22₁) ausgebildet ist, um die Information bezüglich der Vibration der zu vermessenden Oberfläche (16) so bereitzustellen, dass die Information eine Angabe über ein Leistungsspektrum der Vibration der zu vermessenden Oberfläche (16) und/oder ein Ordnungsspektrum der Vibration der zu vermessenden Oberfläche (16) und/oder eine zeitliche Veränderung eines Spektrums und/oder eine örtliche Änderung des Spektrums und/oder eine Extrapolation eines Vibrationswertes und/oder ein Vergleichsergebnis der Vibration oder eines hiervon abgeleiteten Wertes mit einem Schwellwert aufweist.

12. Vibrationsanalyseverfahren mit folgenden Schritten:

Erfassen eines Musters von einer zu vermessenden Oberfläche;
Bereitstellen eines erfassten Bildes von dem Muster;
Auswerten des erfassten Bildes, und Erhalten eines Auswerteergebnisses durch einen Vergleich des erfassten Bildes mit einem Referenzbild, wobei das Auswerteergebnis eine Information bezüglich einer Vibration der zu vermessenden Oberfläche aufweist;
wobei das Muster ein zweidimensionales Muster (82; 94) ist, das eine Vielzahl von nebeneinander angeordneten Streifen (84) oder konzentrischen Ringen (96) umfasst, und die Vielzahl von Streifen (84) oder Ringen (96) eine Vielzahl von Helligkeitsintensitäten aufweist;
**dadurch gekennzeichnet, dass** die Vielzahl von Helligkeitsintensitäten in einer aperiodischen Reihenfolge in dem zweidimensionalen Muster (82; 94) angeordnet ist; oder
dass die Vielzahl von Helligkeitsintensitäten entsprechend einer sinc-Funktion in dem zweidimensionalen Muster (82; 94) angeordnet ist.

13. Computerprogramm, umfassend Befehle, die bei der Ausführung des Verfahrens durch einen Computer, welcher mit einem Logikbauteil zusammenwirkt, bewirken, dass alle Funktionalitäten des Verfahrens nach Anspruch 12 ausgeführt werden.

**Claims**

1. A device (10; 30; 50) for vibration analysis, comprising:

capturing means (12; 12₁) comprising an image sensor and configured to capture a pattern (14; 14₁; 82; 94) from a surface to be measured (16) to provide a captured image (18) of the pattern (14; 14₁; 82; 94);
evaluation means (22; 22₁) configured to evaluate the captured image (18) in order to obtain, by comparing the captured image (18) with a reference image (24), information on a displacement of the surface to be measured (16) between the image captured and the reference image, and to obtain an evaluation result (26) comprising information regarding vibration of the surface to be measured (16);
wherein the pattern is a two-dimensional pattern (82; 94) comprising a multitude of stripes (84) or concentric rings (96) arranged side by side, the multitude of stripes (84) or rings (96) having a multitude of brightness intensities;
**characterized in that** the multitude of brightness intensities are arranged within the two-dimensional pattern (82; 94) in an aperiodic order;

or

wherein the multitude of brightness intensities are arranged within the two-dimensional pattern (82; 94) in accordance with a sinc function.

2. The device as claimed in claim 1, wherein the evaluation means $(22_1)$ is configured to carry out the comparison on the basis of a cross-correlation between the captured image (18) and the reference image (24).

3. The device as claimed in claim 1 or 2, wherein the capturing means $(12; 12_1)$ is configured to capture a multitude of images (18) of the pattern $(14; 14_1; 82; 94)$ in a multitude of iterations and to provide a multitude of images (18);

wherein the image (18) is a second image of the multitude of images that is captured in a second iteration, wherein the reference image (24) is a first image of the multitude of images that is captured in a preceding first iteration;
wherein the evaluation means $(22_1)$ is configured to compare the first image with the second image to obtain first information on a displacement ($\Delta$w) of the surface to be measured (16) between the first image (18) and the second image, and to compare the second image (18) with a third image captured in a third iteration following the second iteration to obtain second information on the displacement of the surface to be measured between the second image and the third image, the information (26) on the vibration comprising the first information on the displacement and the second information on the displacement.

4. The device as claimed in any of the previous claims, wherein the evaluation means $(22_1)$ comprises a correlator (68) configured to perform cross-correlation while using the image (18) and the reference image (24) and to provide a correlation result (72), the evaluation means $(22_1)$ further comprising a peak detector (74) configured to determine a maximum value (56) of the cross-correlation, the evaluation means $(22_1)$ further comprising a signal processor (78) configured to determine, on the basis of the maximum value (56), a vibration distance which at least partially constitutes the information regarding the vibration.

5. The device as claimed in any of the previous claims, wherein the capturing means (12) comprises an image sensor (42), the evaluation means $(22; 22_1)$ being configured to provide the evaluation result (26) on the basis of an evaluation of a displacement ($\Delta$x) of the pattern $(14; 14_1)$ on the image sensor (42).

6. The device as claimed in claim 5, wherein due to projection along a first sensor direction (x) and along a second sensor direction (y), the pattern $(14; 14_1)$ has an extension, within a plane (92) of the image sensor (42), that is larger than that of the image sensor (42).

7. The device as claimed in any of the previous claims, which is configured to measure the surface to be measured (16) in a curved region thereof.

8. The device as claimed in any of the previous claims, further comprising:
an optical signal source $(38; 38_1)$ configured to emit the pattern $(14'_1)$ towards the surface to be measured (16).

9. The device as claimed in claim 8, wherein a transmitting direction (48) along which the optical signal source $(38; 38_1)$ is configured to transmit the pattern $(14; 14_1; 82; 94)$, and a receiving direction (52) from which the capturing means $(22; 22_1)$ is configured to receive the pattern $(14; 14_1; 82; 94)$ are arranged perpendicularly to each other within a tolerance range of $\pm 15°$.

10. The device as claimed in any of the previous claims, wherein the capturing means (12) is configured to capture a multitude of images (18) of the pattern $(14; 14_1; 82; 94)$ with a frequency of at least 40 kHz, the evaluation means $(22; 22_1)$ being configured to provide the evaluation result (26) from the multitude of images (18) in accordance with the Nyquist criterion so that it comprises information on oscillations having a frequency of at least 20 kHz.

11. The device as claimed in any of the previous claims, wherein the evaluation means $(22; 22_1)$ is configured to provide the information regarding the vibration of the surface to be measured (16) in such a way that the information comprises an indication of a power spectrum of the vibration of the surface to be measured (16) and/or of an order spectrum of the vibration of the surface to be measured (16) and/or of a change in a spectrum over time and/or of a change in location of the spectrum and/or of an extrapolation of a vibration value and/or of a comparison result of the vibration or of a value derived therefrom with a threshold value.

12. A vibration analysis method, comprising the steps of:

capturing a pattern from a surface to be measured;
providing a captured image of the pattern;
evaluating the captured image and obtaining an evaluation result by comparing the captured image with a reference image, wherein the evaluation result comprises information regarding vibration of the surface to be measured;

wherein the pattern is a two-dimensional pattern (82; 94) comprising a multitude of stripes (84) or concentric rings (96) arranged side by side, and the multitude of stripes (84) or rings (96) comprise a multitude of brightness intensities; **characterized in that** the multitude of brightness intensities are arranged within the two-dimensional pattern (82; 94) in an aperiodic order; or

the multitude of brightness intensities are arranged within the two-dimensional pattern (82; 94) in accordance with a sinc function.

13. A computer program comprising instructions which, when the method is executed by a computer cooperating with a logic device cause all the functionalities of the method as claimed in claim 12 to be executed.

**Revendications**

1. Appareil (10; 30; 50) d'analyse de vibrations, avec:

un moyen de détection (12; $12_1$) qui présente un capteur d'image qui est conçu pour détecter un modèle (14; $14_1$; 82; 94) d'une surface à mesurer (16) pour fournir une image capturée (18) du modèle (14; $14_1$; 82; 94);
un moyen d'évaluation (22; $22_1$) qui est conçu pour évaluer l'image capturée (18) pour obtenir, par une comparaison de l'image capturée (18) avec une image de référence (24), une information sur un déplacement de la surface à mesurer (16) entre l'image capturée et l'image de référence, et pour obtenir un résultat d'évaluation (26) qui présente une information relative à une vibration de la surface à mesurer (16);
dans lequel le modèle est un modèle bidimensionnel (82; 94) qui comporte une pluralité de bandes (84) ou d'anneaux concentriques (96) juxtaposés, dans lequel la pluralité de bandes (84) ou d'anneaux (96) présente une pluralité d'intensités de luminance;
**caractérisé par le fait que**
la pluralité d'intensités de luminance sont disposées selon un ordre apériodique dans le modèle bidimensionnel (82; 94); ou
dans lequel la pluralité d'intensités de luminosité sont disposées selon une fonction sinc dans le modèle bidimensionnel (82; 94).

2. Dispositif selon la revendication 1, dans lequel le moyen d'évaluation ($22_1$) est conçu pour effectuer la comparaison sur base d'une corrélation croisée entre l'image capturée (18) et l'image de référence (24).

3. Dispositif selon la revendication 1 ou 2, dans lequel le moyen de détection (12; $12_1$) est conçu pour capturer, dans une pluralité d'itérations, une pluralité d'images (18) du modèle (14; $14_1$; 82; 94) et pour fournir une pluralité d'images (18);

dans lequel l'image (18) est une deuxième image de la pluralité d'images qui est capturée dans une deuxième itération, dans lequel l'image de référence (24) est une première image de la pluralité d'images qui est capturée dans une première itération précédente;
dans lequel le moyen d'évaluation ($22_1$) est conçu pour comparer la première image avec la deuxième image pour obtenir une première information sur un déplacement ($\Delta w$) de la surface à mesurer (16) entre la première image (18) et la deuxième image et pour comparer la deuxième image (18) avec une troisième image qui est capturée dans une troisième itération suivant la deuxième itération pour obtenir une deuxième information sur le déplacement de la surface à mesurer entre la deuxième image et la troisième image, dans lequel l'information (26) sur la vibration présente la première information sur le déplacement et la deuxième information sur le déplacement.

4. Dispositif selon l'une des revendications précédentes, dans lequel le moyen d'évaluation ($22_1$) présente un corrélateur (68) qui est conçu pour effectuer une corrélation croisée à l'aide de l'image (18) et de l'image de référence (24) pour fournir un résultat de corrélation (72), dans lequel le moyen d'évaluation ($22_1$) présente par ailleurs un détecteur de valeur de crête (74) qui est conçu pour déterminer une valeur maximale (56) de la corrélation croisée, dans lequel le moyen d'évaluation ($22_1$) présente par ailleurs un processeur de signal (78) qui est conçu pour déterminer, sur base de la valeur maximale (56), une distance de vibration qui constitue au moins partiellement l'information relative à la vibration.

5. Dispositif selon l'une des revendications précédentes, dans lequel le moyen de détection (12) présente un capteur d'image (42), dans lequel le moyen d'évaluation (22; $22_1$) est conçu pour fournir le résultat d'évaluation (26) sur base d'une évaluation d'un déplacement ($\Delta x$) du modèle (14; $14_1$) sur le capteur d'image (42).

6. Dispositif selon la revendication 5, dans lequel le modèle (14; $14_1$) présente, dans un plan (92) du capteur d'images (42), par projection dans une première direction de capteur (x) et dans une deuxième direction de capteur (y), une extension qui est plus grande que le capteur d'image (42).

7. Dispositif selon l'une des revendications précédentes, qui est conçu pour mesurer la surface à mesurer (16) dans une zone courbe de cette dernière.

8. Dispositif selon l'une des revendications précédentes, avec par ailleurs:
une source de signal optique (38; 381) qui est conçue pour émettre le modèle (14'$_1$) en direction de la surface à mesurer (16).

9. Dispositif selon la revendication 8, dans lequel une direction d'émission (48) dans laquelle la source de signal optique (38; 38$_1$) est configurée pour émettre le modèle (14; 14$_1$; 82; 94) et une direction de réception (52) de laquelle le moyen de détection (22; 22$_1$) est configuré pour recevoir le modèle (14; 14$_1$; 82; 94) sont disposées de manière perpendiculaire entre elles dans une plage de tolérance de ± 15°.

10. Dispositif selon l'une des revendications précédentes, dans lequel le moyen de détection (12) est conçu pour capturer une pluralité d'images (18) du modèle (14; 14$_1$; 82; 94) à une fréquence d'au moins 40 kHz, dans lequel le moyen d'évaluation (22; 22$_1$) est conçu pour fournir le résultat d'évaluation (26) à partir de la pluralité d'images (18) selon le critère de Nyquist de sorte qu'il présente des informations sur les vibrations qui présentent une fréquence d'au moins 20 kHz.

11. Dispositif selon l'une des revendications précédentes, dans lequel le moyen d'évaluation (22; 22$_1$) est conçu pour fournir l'information relative à la vibration de la surface à mesurer (16) de sorte que l'information présente une indication sur le spectre de puissance de la vibration de la surface à mesurer (16) et/ou un spectre d'ordre de la vibration de la surface à mesurer (16) et/ou une variation dans le temps d'un spectre et/ou une variation locale du spectre et/ou une extrapolation d'une valeur de vibration et/ou un résultat de comparaison de la vibration ou une valeur dérivée de ce dernier avec une valeur de seuil.

12. Procédé d'analyse de vibrations, aux étapes suivantes consistant à:

    détecter un modèle d'une surface à mesurer;
    fournir une image capturée du modèle;
    évaluer l'image capturée et obtenir un résultat d'évaluation par une comparaison de l'image capturée avec une image de référence, où le résultat d'évaluation présente une information relative à une vibration de la surface à mesurer;
    dans lequel le modèle est un modèle bidimensionnel (82; 94) qui comporte une pluralité de bandes (84) ou d'anneaux concentriques (96) juxtaposés, et la pluralité de bandes (84) ou d'anneaux (96) présente une pluralité d'intensités de luminance;
    **caractérisé par le fait que**
    la pluralité d'intensités de luminance sont disposées selon un ordre apériodique dans le modèle bidimensionnel (82; 94); ou
    la pluralité d'intensités de luminosité sont disposées selon une fonction sine dans le modèle bidimensionnel (82; 94).

13. Programme d'ordinateur, comportant des instructions qui, lors de la réalisation du procédé par un ordinateur qui coopère avec un composant logique, font que soient exécutées toutes les fonctionnalités du procédé selon la revendication 12.

Fig. 1

x(t)

Δt

32

1 2 3 4 •••••• N    t

## Fig. 2a

x[i]

$34_1$

$34_2$

$34_3$

$34_N$

1 2 3 4 •••••• N    t

$34_4$

## Fig. 2b

Δx

$36_1$

1 2 3 4 ••••••

t

$36_2$

$36_3$

$36_4$

## Fig. 2c

Fig. 3

EP 3 755 978 B1

Fig. 4a

Fig. 4b

Fig. 4c

Fig. 4d

Fig. 5

$82_1$

$84_1$  $84_2$  $84_3$  $84_4$

$84_N$

88

86

Fig. 6a

92   42

y

x

$82_1$

Fig. 6b

Fig. 6c

Fig. 6d

Fig. 6e

Fig. 6f

Fig. 6g

Fig. 6h

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1221535 A
- US 2013329953 A
- US 2017169575 A